(19) Europäisches Patentamt / European Patent Office / Office européen des brevets

(11) **EP 2 646 870 B1**

(12) **EUROPÄISCHE PATENTSCHRIFT**

(45) Veröffentlichungstag und Bekanntmachung des Hinweises auf die Patenterteilung:
**19.10.2016   Patentblatt 2016/42**

(21) Anmeldenummer: **11761503.9**

(22) Anmeldetag: **06.09.2011**

(51) Int Cl.:
**G02C 7/02** (2006.01)     **G02C 7/06** (2006.01)

(86) Internationale Anmeldenummer:
**PCT/EP2011/004485**

(87) Internationale Veröffentlichungsnummer:
**WO 2012/072156 (07.06.2012 Gazette 2012/23)**

(54) **VERFAHREN ZUR BERECHNUNG EINES BRILLENGLASES MIT VERBESSERTEM NAHBEREICH**

METHOD FOR CALCULATING A SPECTACLE LENS WITH IMPROVED NEAR ZONE

PROCÉDÉ DE CALCUL ASSOCIÉ À UN VERRE DE LUNETTES ASSURANT UNE VISION DE PRÈS AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2010   DE 102010052936**

(43) Veröffentlichungstag der Anmeldung:
**09.10.2013   Patentblatt 2013/41**

(73) Patentinhaber: **Rodenstock GmbH**
**80687 München (DE)**

(72) Erfinder:
  • **ESSER, Gregor**
    **80686 München (DE)**
  • **BECKEN, Wolfgang**
    **82061 Neuried (DE)**
  • **ALTHEIMER, Helmut**
    **87650 Baisweil-Lauchdorf (DE)**
  • **WELK, Andrea**
    **81547 München (DE)**
  • **SEIDEMANN, Anne**
    **81375 München (DE)**
  • **WEHNER, Edda**
    **82275 Emmering (DE)**
  • **MÜLLER, Werner**
    **75443 Ötisheim (DE)**
  • **UTTENWEILER, Dietmar**
    **82057 Icking (DE)**

(74) Vertreter: **Müller-Boré & Partner**
**Patentanwälte PartG mbB**
**Friedenheimer Brücke 21**
**80639 München (DE)**

(56) Entgegenhaltungen:
WO-A1-2008/089998      WO-A1-2010/054817
DE-A1-102008 057 205     DE-A1-102008 057 206
US-A1- 2003 107 702

**Beschreibung**

Die vorliegende Erfindung betrifft ein Verfahren zur Optimierung und Herstellung eines Brillenglases zur Korrektion einer astigmatischen Refraktion eines Auges eines Brillenträgers. Ferner bezieht sich die Erfindung auf ein Computerprogrammerzeugnis, ein Speichermedium und eine Vorrichtung zur Herstellung eines Brillenglases zur Korrektion einer astigmatischen Refraktion eines Auges eines Brillenträgers.

Für die Herstellung bzw. Optimierung von Brillengläsern, insbesondere von individuellen Brillengläsern wird jedes Brillenglas so gefertigt, dass für jede gewünschte Blickrichtung oder jeden gewünschten Objektpunkt eine möglichst gute Korrektur eines Refraktionsfehlers des jeweiligen Auges des Brillenträgers erreicht wird. Im Allgemeinen gilt ein Brillenglas für eine gegebene Blickrichtung dann als vollkorrigierend, wenn die Werte Sphäre, Zylinder und Achse der Wellenfront beim Passieren der Scheitelpunktkugel mit den Werten für Sphäre, Zylinder und Achse der Verordnung für das fehlsichtige Auge übereinstimmen. Bei der Refraktionsbestimmung für ein Auge eines Brillenträgers werden dioptische Werte (Sphäre, Zylinder, Achslage) für eine weite (i.d.R. unendliche) Entfernung und gegebenenfalls (für Mehrstärkengläser bzw. Gleitsichtgläser) eine Addition für eine nahe Entfernung (z.B. nach DIN 58208) bestimmt. Damit ist die Verordnung (Sphäre, Zylinder, Achslage und gegebenenfalls Addition) festgelegt, die an einen Brillenglashersteller übermittelt wird. Bei modernen Brillengläsern können zusätzlich auch von der Norm abweichende Objektentfernungen, die bei der Refraktionsbestimmung verwendet wurden, angegeben werden.

Eine vollständige Korrektur für alle Blickrichtungen gleichzeitig ist aber im Normalfall nicht möglich. Daher werden die Brillengläser derart gefertigt, dass sie vor allem in den hauptsächlichen Nutzungsbereichen, insbesondere in den zentralen Durchblicksbereichen eine gute Korrektur von Fehlsichtigkeiten des Auges und nur geringe Abbildungsfehler bewirken, während in peripheren Bereichen größere Abbildungsfehler zugelassen werden.

Um ein Brillenglas derart fertigen zu können, erfolgt zunächst eine Berechnung der Brillenglasflächen bzw. zumindest einer der Brillenglasflächen derart, dass dadurch die gewünschte Verteilung der unvermeidlichen Abbildungsfehler bewirkt wird. Diese Berechnung und Optimierung erfolgt üblicherweise mittels eines iterativen Variationsverfahren durch Minimieren einer Zielfunktion. Als Zielfunktion wird insbesondere eine Funktion F mit folgendem funktionalen Zusammenhang zur sphärischen Wirkung $S$, zum Betrag der zylindrischen Wirkung $Z$ und zur Achslage des Zylinders $\alpha$ (auch als "SZA"-Kombination bezeichnet) berücksichtigt und minimiert:

$$F = \sum_{i=1}^{m}\left[g_{i,S\Delta}\left(S_{\Delta,i} - S_{\Delta,i,Soll}\right)^2 + g_{i,Z\Delta}\left(Z_{\Delta,i} - Z_{\Delta,i,Soll}\right)^2 + ...\right].$$

Dabei werden in der Zielfunktion F an den Bewertungsstellen i des Brillenglases zumindest die tatsächlichen Refraktionsdefizite der sphärischen Wirkung $S_{\Delta,i}$ und der zylindrischen Wirkung $Z_{\Delta,i}$ sowie Sollvorgaben für die Refraktionsdefizite der sphärischen Wirkung $S_{\Delta,i,Soll}$ und der zylindrischen Wirkung $Z_{\Delta,i,Soll}$ berücksichtigt. Die jeweiligen Refraktionsdefizite an den jeweiligen Bewertungsstellen werden vorzugsweise mit Gewichtungsfaktoren $g_{i,S\Delta}$ bzw. $g_{i,Z\Delta}$ berücksichtigt. Dabei bilden die Sollvorgaben für die Refraktionsdefizite der sphärischen Wirkung $S_{\Delta,i,Soll}$ und/oder der zylindrischen Wirkung $Z_{\Delta,i,Soll}$ insbesondere zusammen mit den Gewichtungsfaktoren $g_{i,S\Delta}$ bzw. $g_{i,Z\Delta}$ das sogenannte Brillenglasdesign. Darüber hinaus können insbesondere auch weitere Residuen, insbesondere weitere zu optimierende Größen, wie z.B. Koma und/oder sphärische Aberration und/oder Prisma und/oder Vergrößerung und/oder anamorphotische Verzerrung, usw., berücksichtigt werden, was insbesondere durch den Ausdruck "+..." angedeutet ist.

Betrachtet man bei der Brillenglasdurchrechnung die Strahldurchrechnung durch einen bestimmten Durchblickspunkt i, also eine bestimmte Bewertungsstelle des entsprechenden Brillenglases, dann hat die Wellenfront an der Scheitelpunktkugel eine bestimmte SZA-Kombination. Ziel bei einer Brillenglasoptimierung ist, dass diese SZA-Kombination möglichst gut mit der SZA-Kombination der Refraktionsbestimmung übereinstimmt. Da dies in der Regel nicht simultan an allen Durchblickspunkten i gleichzeitig gelingen kann, wird eine Funktion F als Zielfunktion aufgestellt, deren Minimierung einen möglichst passenden Kompromiss über alle Bewertungsstellen bzw. Durchblickspunkte i ergibt.

Eine bevorzugte prinzipielle Vorgehensweise zur Bestimmung des Refraktionsdefizits ist beispielsweise in Diepes H., Blendowske R. "Optik und Technik der Brille", Optische Fachveröffentlichung GmbH, Heidelberg (2002), insbesondere auf Seite 481 ff. beschrieben. Dazu betrachtet man die sogenannte Brechwertmatrix oder Vergenzmatrix **S**, welche wie folgt mit den Werten für die sphärischen Wirkung $S$, den Betrag der zylindrischen Wirkung $Z$ und der Achslage des Zylinders $\alpha$ zusammenhängt:

$$\mathbf{S} = \begin{pmatrix} S_{xx} & S_{xy} \\ S_{xy} & S_{yy} \end{pmatrix} = \begin{pmatrix} \left(S + \dfrac{Z}{2}\right) - \dfrac{Z}{2}\cos 2\alpha & -\dfrac{Z}{2}\sin 2\alpha \\ -\dfrac{Z}{2}\sin 2\alpha & \left(S + \dfrac{Z}{2}\right) + \dfrac{Z}{2}\cos 2\alpha \end{pmatrix}$$

$$Z = \sqrt{\left(S_{xx} - S_{yy}\right)^2 + 4S_{xy}^2}$$

$$\Leftrightarrow \qquad S = \frac{1}{2}\left(S_{xx} + S_{yy} - Z\right)$$

$$\tan \alpha = \frac{S - S_{xx}}{S_{xy}}$$

Die Vergenzmatrix **S** wird dabei einerseits für die SZA-Werte $S_{SK}$, $Z_{SK}$, $\alpha_{SK}$ an der Scheitelpunktpunktkugel und andererseits für die aus der Refraktionsbestimmung für das entsprechende Auge des Brillenträgers ermittelten SZA-Werte $S_{Ref}$, $Z_{Ref}$, $\alpha_{Ref}$ bestimmt. Dadurch ergibt sich $\mathbf{S}_{SK}$ bzw. $\mathbf{S}_{Ref}$. Dabei beschreibt anschaulich gesprochen $\mathbf{S}_{SK}$ gewissermaßen die lokale Wirkung des Brillenglases, während $\mathbf{S}_{Ref}$ die für den Brillenträger in Idealfall gewünschte Wirkung beschreibt.

Für eine ideale Abbildung sollte gefordert werden, dass $\mathbf{S}_{SK}$ und $\mathbf{S}_{Ref}$ übereinstimmen, was aber nicht für alle Bewertungsstellen eines Brillenglases gleichzeitig erfüllbar ist. Somit bleibt als Differenzmatrix:

$$\mathbf{S}_\Delta = \mathbf{S}_{SK} - \mathbf{S}_{Ref}$$
$$= \begin{pmatrix} S_{SK,xx} & S_{SK,xy} \\ S_{SK,xy} & S_{SK,yy} \end{pmatrix} - \begin{pmatrix} S_{Ref,xx} & S_{Ref,xy} \\ S_{Ref,xy} & S_{Ref,yy} \end{pmatrix}$$
$$= \begin{pmatrix} S_{SK,xx} - S_{Ref,xx} & S_{SK,xy} - S_{Ref,xy} \\ S_{SK,xy} - S_{Ref,xy} & S_{SK,yy} - S_{Ref,yy} \end{pmatrix}$$

welche in der Regel von Null verschieden ist. Entsprechend der oben dargestellten Definition der Vergenzmatrix, werden der Differenzmatrix $\mathbf{S}_\Delta$ entsprechende SZA-Werte als Refraktionsdefizit zugeordnet:

$$Z_\Delta = \sqrt{\left(\left(S_{SK,xx} - S_{Ref,xx}\right) - \left(S_{SK,yy} - S_{Ref,yy}\right)\right)^2 + 4\left(S_{SK,xy} - S_{Ref,xy}\right)^2}$$

$$S_\Delta = \frac{1}{2}\left(\left(S_{SK,xx} - S_{Ref,xx}\right) + \left(S_{SK,yy} - S_{Ref,yy}\right) - Z_\Delta\right)$$

$$\tan \alpha_\Delta = \frac{S_\Delta - \left(S_{SK,xx} - S_{Ref,xx}\right)}{S_{SK,xy} - S_{Ref,xy}}$$

Da der Grad der Unschärfe der Abbildung bei nicht verschwindendem $\mathbf{S}_\Delta$ insbesondere nur von $S_\Delta$ und $Z_\Delta$ abhängt (insbesondere aber nicht von $\alpha_\Delta$), wird eine Optimierung vorzugsweise nur nach $S_\Delta$ und $Z_\Delta$ durchgeführt. Die Achslage der Wellenfront und der transformierten Refraktion fließen dabei aber sehr wohl beide ein. Man beachte, dass, falls $S_\Delta = 0$ und $Z_\Delta = 0$ ist, gleichzeitig folgt, dass $S_{SK} = S_{Ref}$, $Z_{SK} = Z_{Ref}$ und $\alpha_{SK} = \alpha_{Ref}$ ist. Explizit gilt:

$$Z_\Delta = \sqrt{Z_{SK}^2 + Z_{Ref}^2 - 2 Z_{SK} Z_{Ref} \cos(2(\alpha_{SK} - \alpha_{Ref}))}$$

$$S_\Delta = S_{SK} - S_{Ref} + \frac{1}{2}\left((Z_{SK} - Z_{Ref}) - Z_\Delta\right)$$

Dies zeigt, wie die Achslage in die Größen $S_\Delta$ und $Z_\Delta$ eingeht. Eine Änderung der Achslage um den Winkel $\delta\alpha_{SK}$ bewirkt, dass $\cos(2(\alpha_{SK} + \delta\alpha_{SK} - \alpha_{Ref}))$ statt $\cos(2(\alpha_{SK} - \alpha_{Ref}))$ unter der Wurzel steht. Die Optimierung wird mit der Zielfunktion dadurch durchgeführt, dass vorzugsweise an jedem Durchblickspunkt $i$ jeder der Größen $S_{\Delta,i}$, $Z_{\Delta,i}$ ein Sollwert $S_{\Delta,i,Soll}$ bzw. $Z_{\Delta,i,Soll}$ zugeordnet wird und anschließend die Zielfunktion minimiert wird. Für weitere Hintergründe zum Verständnis dieser Vorgehensweise wird auf den Artikel von W. Becken, A. Seidemann, H. Altheimer, G. Esser und D. Uttenweiler "Brillengläser im Sport: Optimierung der Abbildungseigenschaften unter physiologischen Aspekten", Z. Med. Phys. 17 (2007), 56-66 hingewiesen.

Für eine Korrektion einer astigmatischen Refraktion eines Auges ist somit die Kenntnis sowohl des Betrages der astigmatischen Refraktion, d.h. des Wertes des Zylinders, als auch dessen Achslage entscheidend. Um eine astigmatische Refraktion des Auges korrigieren zu können, werden daher diese Werte für das zu korrigierende Auge vermessen, während sich das Auge in einer Messstellung bzw. Referenzblickrichtung, insbesondere Nullblickrichtung befindet. Dabei wird vorzugsweise ein Koordinatensystem festgelegt, und die Achslage der astigmatischen Refraktion in Bezug auf dieses Koordinatensystem bestimmt. Der Betrag des Astigmatismus kann als Differenz der Hauptbrechwerte angegeben werden. Als Koordinatensystem lässt sich dabei beispielsweise ein kartesisches Koordinatensystem mit den Achsen $\mathbf{e}_x$, $\mathbf{e}_y$ und $\mathbf{e}_z$ angeben, dessen Koordinatenursprung insbesondere im Augendrehpunkt des zu korrigierenden Auges liegt. Dabei zeigt die Achse $\mathbf{e}_z$ vorzugsweise parallel zur Referenzblickrichtung, insbesondere zur Nullblickrichtung und ist in Richtung des Hauptstrahls orientiert. Vorzugsweise ist die Achse $\mathbf{e}_z$ eine horizontale Achse, die in Bezug auf das Auge in der Nullblickrichtung nach hinten, also in Richtung des Lichtstrahls zeigt. Die Achse $\mathbf{e}_x$ liegt beispielsweise horizontal und senkrecht zur Achse $\mathbf{e}_z$, insbesondere senkrecht zur Referenzblickrichtung bzw. Nullblickrichtung. Die Achse $\mathbf{e}_y$ liegt schließlich senkrecht zu den beiden anderen Achsen und ist insbesondere vertikal nach oben orientiert. Damit bilden die drei Achsen $\mathbf{e}_x$, $\mathbf{e}_y$ und $\mathbf{e}_z$ beispielsweise ein Basiskoordinatensystem, in dem sich auch die Achslage eines zu korrigierenden Astigmatismus beschreiben lässt.

Beim Blicken durch ein Brillenglas führt das Augenpaar ständig Blickbewegungen aus, wodurch sich die Durchblickpunkte innerhalb des Brillenglases verändern. Damit ergeben sich bei Blickbewegungen ständig Veränderungen der Abbildungseigenschaften, insbesondere der Abbildungsfehler für das Brillenglas. Außerdem führt jedes Auge bei Blickbewegungen je nach Position und Entfernung eines zu beobachtenden Objekts auch eine Akkommodation an die geänderte Objektentfernung und eine Torsion um die momentane Achse der Blickrichtung aus. Bei einer astigmatischen Refraktion des Auges führt dies insbesondere im Nahbereich oft zu einer unbefriedigenden Korrektion des Astigmatismus.

Normalerweise werden die Istwerte des Brillenglases mit den Verordnungsdaten an der Scheitelpunktkugel zusammengesetzt, da die Verordnungsdaten (Refraktionsdaten) auch in der Ebene der Refraktionsbrille vorliegen. Dies ist aber beim Blick in die Nähe ungenau, da die Akkommodation nicht an der Scheitelpunktkugel erfolgt, sondern erst am Ort der Augenlinse. Die Wellenfront und hierbei insbesondere die zylindrische Komponente der Wellenfront ändert sich aber bei der propagation vom Brillenglas bei zur Augenlinse. Deshalb ändert sich der Betrag des zu korrigierenden Zylinders in der Brillenglasebene (Scheitelpunktkugel) beim Blick in die Nähe, also beim Betrachten naher Objekte. Dies ist selbst dann der Fall, wenn die Akkommodation völlig sphärisch erfolgt. Dieser sogenannte Einstellastigmatismus ist z.B. im Buch "Methoden der Refraktionsbestimmung" von Kunibert Krause beschrieben.

Um die optischen Eigenschaften insbesondere für die Nutzung eines Brillenglases oder eines Brillenglaspaares in der Nähe zu verbessern wurde in WO 2010/054817 A1 vorgeschlagen, anstelle des in der Refraktionsbestimmung für die Ferne gemessenen Wertes der astigmatischen Refraktion bei der Optimierung des Brillenglases in der Zielfunktion $F$ eine transformierte astigmatische Refraktion zu verwenden, in welcher eine von der Blickrichtung des anderen Auges abhängige Transformation der Achslage der astigmatischen Refraktion erfolgt. Es wird somit für jeden Durchblickspunkt des herzustellenden Brillenglases, welcher als Bewertungsstelle $i$ in die Zielfunktion für die Optimierung des Brillenglases einfließt, neben der zu diesem Durchblickspunkt gehörenden Blickrichtung des Auges die korrespondierende Blickrichtung des anderen Auges, insbesondere unter Berücksichtigung der optischen Eigenschaften des anderen Brillenglases, berechnet. In Abhängigkeit von den Blickrichtungen beider Augen wird eine entsprechende Torsionskorrektur für die Achslage des Astigmatismus errechnet und in der Zielfunktion berücksichtigt. Dies führt zu einer wesentlichen Verbesserung der optischen Eigenschaften des Brillenglases insbesondere für die Benutzung im Nahbereich ohne den Aufwand bei der Refraktionsbestimmung erheblich zu vergrößern. Allerdings ist die Berechnung der transformierten Achslage, welche eine Berechnung beider korrespondierenden Hauptstrahlen für jede Bewertungsstelle umfasst, zu einer verlängerten Berechnungsdauer.

Aufgabe der Erfindung ist daher eine möglichst einfache und schnelle und damit kostengünstige Optimierung und Herstellung eines Brillenglases für eine möglichst gute Korrektion einer astigmatischen Refraktion insbesondere für die Nutzung des Brillenglases in der Nähe zu erreichen. Diese Aufgabe wird gelöst, wie in den unabhängigen Ansprüchen angegeben. Bevorzugte Ausführungsformen sind Gegenstand der abhängigen Ansprüche.

Insbesondere stellt die Erfindung somit ein Verfahren zur Optimierung und Herstellung eines Brillenglases für eine bestimmte Gebrauchssituation zur Korrektion zumindest einer astigmatischen Refraktion eines Auges eines Brillenträgers bereit, welche in einer Referenzblickrichtung $-\mathbf{e}_z$ des Auges einen Zylinderwert (im Folgenden als Zylinderreferenzwert $Z_0$ bezeichnet) und eine Achslage (im Folgenden Zylinderreferenzachse $\alpha_0$ bezeichnet), d.h. einen Zylinderachse der Augenrefraktion des Auges bei Stellung des Auges in der Referenzblickrichtung des Auges, aufweist. Das Verfahren umfasst dabei einen Berechnungs- bzw. Optimierungsschritt des Brillenglases, d.h. zumindest einer Fläche oder eines Flächenbereichs des Brillenglases, welcher umfasst:

- Bestimmen einer Objektentfernung $a_i$ für zumindest eine Bewertungsstelle $i_b$ des Brillenglases für eine von der Referenzblickrichtung $-\mathbf{e}_z$ abweichende Blickrichtung $-\mathbf{e}_\zeta$ des Auges;
- Ermitteln einer transformierten astigmatischen Refraktion für die zumindest eine Bewertungsstelle $i_b$ des Brillenglases aus dem Zylinderreferenzwert $Z_0$ und der Zylinderreferenzachse $\alpha_0$ in Abhängigkeit von der bestimmten Objektentfernung $a_i$ ; und
- Optimieren des Brillenglases derart, dass für die zumindest eine Bewertungsstelle $i_b$ eine Korrektion der transformierten astigmatischen Refraktion durch das Brillenglas in der bestimmten Gebrauchssituation berücksichtigt wird,

wobei das Ermitteln der transformierten astigmatischen Refraktion ein Ermitteln eines transformierten Zylinderwerts $Z_i$ und/oder einer transformierten Zylinderachse $\alpha_i$ in Abhängigkeit von der bestimmten Objektentfernung $a_i$ umfasst.

Insbesondere kann die Refraktionsbestimmung für den Brillenträger ohne zusätzlichen Aufwand in herkömmlicher Weise erfolgen. Es können somit in bewährter Weise die dioptischen Werte (Sphäre, Zylinder, Achslage) für eine weite (i.d.R. unendliche) Entfernung und gegebenenfalls (für Mehrstärkengläser bzw. Gleitsichtgläser) eine Addition für eine nahe Entfernung (z.B. nach DIN 58208) bestimmt und insbesondere für die individuelle Optimierung und Herstellung eines Brillenglases bereitgestellt werden. Abweichend von der herkömmlichen Vorgehensweise bei der Optimierung und Herstellung eines Brillenglases werden die in der Refraktionsbestimmung ermittelten Verordnungsdaten (Sphäre, Zylinder, Achslage und gegebenenfalls Addition) allerdings nicht unmittelbar für die Korrektur durch das Brillenglas in allen Durchblickspunkten (Bewertungsstellen) des Brillenglases berücksichtigt. Sie stellen vielmehr die für eine Referenzblickrichtung, insbesondere einen Fernbezugspunkt des Brillenglases, zu berücksichtigenden Verordnungsdaten dar. Um eine Verbesserung der optischen Eigenschaften im Nahbereich zu erreichen, wird die in der Refraktionsbestimmung für den Brillenträger ermittelte astigmatische Refraktion insbesondere für Durchblickpunkte im Nahbereich wie nachfolgend genauer definiert transformiert. Diese Transformation erfolgt dabei insbesondere für jedes Auge bzw. Brillenglas eigenständig und in Abhängigkeit von einer Objektentfernung für den entsprechenden Durchblickpunkt des Brillenglases. Damit kann eine Verbesserung der optischen Eigenschaften des Brillenglases insbesondere im Nahbereich erreicht werden, ohne dass der Aufwand bei der Refraktionsbestimmung wesentlich erhöht werden muss.

Vorzugsweise wird ein ortsfestes bzw. objektfestes Basiskoordinatensystem für das Auge, wie bereits oben beispielhaft beschrieben, festgelegt. Im Basiskoordinatensystem wird vorzugsweise die Zylinderachse einer astigmatischen Refraktion des Auges von einem Optiker oder Augenarzt für einen Patienten oder Brillenträger in der Referenzblickrichtung individuell ermittelt und als Zylinderreferenzachse für das Verfahren zur Optimierung und Herstellung des Brillenglases zur Korrektion der astigmatischen Refraktionen bereitgestellt. In einer bevorzugten Ausführungsform ist die Referenzblickrichtung des Auges die Nullblickrichtung und verläuft horizontal gerade aus in die Ferne bzw. ins Unendliche. Sie ist damit parallel zur dritten Basiskoordinatenachse $\mathbf{e}_z$ des Auges, wobei sie in einer bevorzugten Konvention entgegengesetzt orientiert ist, was durch das Minuszeichen zum Ausdruck gebracht werden soll. Auch für die Blickrichtung $- \mathbf{e}_\zeta$ soll diese Konvention gelten, weshalb diese Blickrichtung parallel zum augenseitigen Hauptstrahl liegt und entgegengesetzt dazu orientiert ist. Die Zylinderreferenzachse lässt sich beispielsweise über die anderen beiden Koordinatenachsen ausdrücken.

Es wird also ausgehend von der in der Referenzblickrichtung zu korrigierenden astigmatischen Refraktion des Auges, welche beispielsweise von einem Augenoptiker in bekannter Weise gemessen bzw. ermittelt werden kann, eine Transformation durchgeführt, die von der in durch die bestimmte Gebrauchssituation festgelegte Objektentfernung abhängt, um zu der transformierten astigmatischen Refraktion zu kommen. Die transformierte astigmatische Refraktion wird dabei vorzugsweise wie die astigmatische Refraktion in der Referenzblickrichtung in Form eines Zylinderwerts (insbesondere als skalare Größe mit der Einheit dpt) und einer Achslage (z.B. in Form eines transformierten Winkels relativ zu einer Torsionsreferenzachse der ersten Blickrichtung) angeben. Diese transformierte astigmatische Refraktion fließt dann als die zu korrigierende Refraktion des Auges in der zur Bewertungsstelle $i_b$ gehörenden Blickrichtung $-\mathbf{e}_\zeta$ insbesondere in die Zielfunktion, wie sie beispielhaft oben beschrieben ist, für die Berechnung bzw. Optimierung des Brillenglases ein.

Bei der Optimierung bewertet die Zielfunktion insbesondere lokale Werte der Fehlrefraktion des Brillenglases in einer Vielzahl von Bewertungsstellen des Brillenglases, also für eine Vielzahl verschiedener Blickrichtungen des zugehörigen Auges in der bestimmten Gebrauchssituation. Das Optimieren des Brillenglases erfolgt somit insbesondere durch ein Minimieren der Zielfunktion für das Brillenglas, wobei in der Zielfunktion für die zumindest eine Bewertungsstelle $i_b$ eine Korrektion der transformierten astigmatischen Refraktion durch das Brillenglas in der bestimmten Gebrauchssituation berücksichtigt wird. Ein Minimieren der Zielfunktion erfolgt dabei vorzugsweise durch ein Variieren zumindest einer Fläche des Brillenglases und ein Auswerten der optischen Eigenschaften des Brillenglases in der bestimmten Gebrauchssituation bis der Wert der Zielfunktion unter einen vorgegebenen Grenzwert gesunken ist oder bis sich der Wert der Zielfunktion zwischen aufeinanderfolgenden Auswerteschritten bzw. Rekursionsschritten nicht mehr oder um weniger als einen vorgegebenen Grenzwert ändert. Ein solcher Grenzwert kann als Abbruchkriterium für den Berechnungs- bzw. Optimierungsschritt festgelegt werden.

Vorzugsweise wird das Verfahren derart durchgeführt, dass die Referenzblickrichtung $-\mathbf{e}_z$ des Auges der Nullblickrichtung des Brillenträgers entspricht. Vorzugsweise erfolgt das Optimieren des Brillenglases derart, dass für zumindest einen Bezugspunkt $i_0$ des Brillenglases, insbesondere einen Fernbezugspunkt, eine Korrektion der astigmatischen (und vorzugsweise auch der sphärischen) Refraktion des Auges des Brillenträgers gemäß den in einer Refraktionsbestimmung ermittelten Referenzwerten bzw. Verordnungswerten $Z_0$, $\alpha_0$ bzw. $S_0$ berücksichtigt wird. Entsprechend erfolgt vorzugsweise das Minimieren der Zielfunktion auf diese Korrektion hin. Besonders bevorzugt entspricht die zumindest eine Bewertungsstelle $i_b$ des Brillenglases einem Nahbezugspunkt des Brillenglases.

Erfindungsgemäß wird für die astigmatische Refraktion zumindest entweder der Zylinderwert oder die Achselage in der entsprechend geforderten Weise transformiert. Besonders bevorzugt werden beide Werte transformiert. Aber bereits bei einer entsprechenden Transformation der astigmatischen Refraktion mit Bezug auf einen der beiden Werte wird eine Verbesserung der optischen Eigenschaften und damit der Verträglichkeit der Brille erreicht. Soweit nur einer der beiden Werte erfindungsgemäß transformiert wird, kann der andere Wert unverändert aus der Refraktionsbestimmung übernommen werden. Ohne die bevorzugte Kombination beider Transformationen außer acht lassen zu wollen, werden in Folgenden die durch die Erfindung bereitgestellten Transformationen der einzelnen Werte nacheinander beschrieben.

Somit wird in einem Aspekt der Erfindung insbesondere der Zylinderwert der astigmatischen Refraktion transformiert. Falls das Ermitteln der transformierten astigmatischen Refraktion ein Ermitteln eines transformierten Zylinderwerts $Z_i$ umfasst, wird dieser erfindungsgemäß derart ermittelt, dass er gemäß

$$Z_i = Z_0 + e\left(Add + \frac{1}{a_i}\right)\left(-2 + e\left(Add + \frac{1}{a_i} - 2S_0 - Z_0\right)\right)Z_0$$

von einem Abstand $e$ zwischen dem Brillenglas (insbesondere dem Scheitelpunkt des Brillenglases) und der Hauptebene des Auges und von einer für die Referenzblickrichtung $-\mathbf{e}_z$ ermittelten Sphäre $S_0$ der zu korrigierenden Refraktion des Auges abhängt, wobei $Add$ einen Brechwertzuwachs von der Referenzblickrichtung $-\mathbf{e}_z$ zu einer der zumindest einen Bewertungsstelle $i_b$ entsprechenden Blickrichtung $-\mathbf{e}_\zeta$ des Auges bezeichnet. Dabei entspricht die Sphäre $S_0$ insbesondere dem in der Refraktionsbestimmung für die Referenzblickrichtung $-\mathbf{e}_z$ (vorzugsweise Nullblickrichtung) ermittelten Wert der Sphäre.

Dabei wird vorzugsweise zu jeder Bewertungsstelle des Brillenglases die entsprechende Transformation des Zylinderwerts durchgeführt. Dieser transformierte Zylinderwert fließt dann insbesondere als zu korrigierender Wert $Z_{Ref}$ (siehe oben) in die Zielfunktion ein. Erfindungsgemäß wurde erkannt, dass durch diese sehr schnell berechenbare Transformation, welche insbesondere keine zusätzlichen Messungen der Refraktion für eine Vielzahl weiterer Blickrichtungen erfordert, zu einer deutlichen Verbesserung der optischen Eigenschaften insbesondere im Nahbereich eines Brillenglases führt. Insbesondere wurde erkannt, dass durch diese Transformation des Zylinderwerts eine sehr effiziente Berücksichtigung und Kompensation des Einstellastigmatismus erreicht wird. Außerdem kann diese Transformation mit äußerst geringem Rechenaufwand in einer iterativen Optimierungsroutine implementiert werden.

So wurde erfindungsgemäß eine besonders effiziente Transformation des Zylinderwerts gefunden, die für eine bestimmte Gebrauchssituation nur von den Verordnungsdaten Sphäre, Zylinder und Achse in der Referenzblickrichtung beispielsweise Sphäre $S_F$, Zylinder $Z_F$ und Achse in der Ferne sowie einem Akkommodationserfolg $\Delta A$ des Auges abhängt. Dies lässt sich wie folgt anschaulich erklären.

So lässt sich beispielsweise der Zylinder in der Nähe $Z_N$ mit folgender Näherungsformel sehr schnell und einfach aus den Werten in der Ferne berechnen:

$$Z_N = Z_F + Z_E \tag{1a}$$

$$Z_E = e\Delta A\left(2 + e(\Delta A + 2S'_F)\right)Z_F \tag{1b}$$

mit

$e$ Abstand Scheitelpunkt des Brillenglas zur Hauptebene des Auges

$$S'_F = S_F + \frac{Z_F}{2}$$

Sphärisches Äquivalent der Verordnung in der Ferne
$Z_F$ Zylinder der Verordnung in der Ferne
$\Delta A$ Akkommodationserfolg des Auges

Der Akkommodationserfolg $\Delta A$ wiederum kann aus der in der Refraktionsbestimmung ermittelten Addition $Add$ und der vorgegebenen Objektentfernung (auch als Objektabstand bezeichnet) $a_1$ (in einer Bewertungsstelle $i_b = 1$) berechnet werden.

$$\Delta A = -\left(\frac{1}{a_1} + Add\right)$$

Damit ergibt sich für den transformierten Zylinderwert (transformierte zylindrische Wirkung) in der Nähe

$$Z_N = Z_F + e\left(Add + \frac{1}{a_i}\right)\left(-2 + e\left(Add + \frac{1}{a_i} - 2S_F - Z_F\right)\right)Z_F, \tag{2}$$

was der oben vorgeschlagenen Transformation entspricht, wobei hier als Referenzwerte insbesondere die Refraktionswerte der Verordnung (Index "F" anstelle der allgemeinen Bezeichnung mit Index "0") verwendet wurde, während für die allgemeine Bezeichnung der Bewertungsstelle $i_b$ hier in bevorzugter Weise ein Nahbezugspunkt des Brillenglases (Index "N") verwendet wurde.

Vorzugsweise umfasst das Verfahren im Fall des Ermittelns eines transformierten Zylinderwerts $Z_i$ (insbesondere im Nahbezugspunkt $Z_N$) außerdem ein Ermitteln einer transformieren Sphäre $S_i$ (insbesondere $S_N$), welche gemäß

$$S_i = S_0 + \frac{(Z_0 - Z_i)}{2} + Add + e^2\left(Add + \frac{1}{a_i}\right)Z_0^2 \tag{3}$$

vom transformierte Zylinderwert $Z_i$ abhängt und wobei das Optimieren des Brillenglases derart erfolgt, dass für die zumindest eine Bewertungsstelle $i_b$ eine Korrektur der transformierten Sphäre $S_i$ durch das Brillenglas in der bestimmten Gebrauchssituation berücksichtigt wird.

So ist es nämlich möglich, den Einstellfehler des sphärischen Äquivalents $S'_E$ und damit das sphärische Äquivalent $S'_N$ in der Nähe (d.h. im Nahbezugspunkt) (oder in einer allgemeinen Bezeichnungsweise $S'_i$) und die Sphäre $S_N$ in der Nähe (bzw. allgemein $S_i$) sehr schnell und einfach mit folgender Gleichung zu berechnen:

$$S'_N = S'_F + Add + S'_E \tag{4a}$$

$$S'_E = -e^2\Delta A Z_F^2 \tag{4b}$$

$$S_N = S'_N - \frac{Z_N}{2} \qquad\qquad (4c)$$

Die Sphäre in der Nähe $S_N$ ändert sich aufgrund der Änderung des Zylinders in der Nähe $Z_N$ auch dann, wenn die Änderung des sphärischen Äquivalents $S'_N$ nach Gleichung (4a) und (4b) vernachlässigt wird.

Das oben beschriebene Verfahren zur zumindest teilweisen Kompensation des Einstellastigmatismus und des Einstellfehlers des sphärischen Äquivalents können in einer bevorzugten Ausführungsform nur für die Nähe verwendet werden, z.B. um ein Einstärkenbrillenglas für die Nähe zu berechnen oder um den Einstellastigmatismus und den Einstellfehler des sphärischen Äquivalents im Nahbezugspunkt eines Gleitsichtglases zu berechnen. In diesem Fall wird vorzugsweise für jede Blickrichtung insbesondere eine durch die bestimmte Gebrauchssituation festgelegte Objektentfernung verwendet. In einer weiteren bevorzugten Ausführungsform kann die jeweilige Objektentfernung zwischen den Werten in der Ferne und der Nähe interpoliert werden. Alternativ ist es auch möglich mit den oben aufgeführten Gleichungen direkt für jede Durchblicksstelle des Gleitsichtglases den transformierten Zylinderwert und die transformierte Sphäre zu berechnen, indem in den Gleichungen (2) und (3) die für jede Blickrichtung durch die bestimmte Gebrauchssituation festgelegte Objektentfernung und für *Add* anstelle der Addition der vorgegebene Brechwertzuwachs im entsprechenden Durchblickspunkt eingesetzt verwerden.

In einem weiteren Aspekt der Erfindung wird insbesondere der Achslage der astigmatischen Refraktion transformiert. Falls das Ermitteln der transformierten astigmatischen Refraktion ein Ermitteln einer transformierten Zylinderachse $\alpha_i$ umfasst, wird diese erfindungsgemäß derart ermittelt, dass sie mit einer sowohl zur Referenzblickrichtung $-\mathbf{e}_z$ als auch zu einer der zumindest einen Bewertungsstelle $i_b$ entsprechenden Blickrichtung $-\mathbf{e}_\zeta$ des Auges senkrechten Torsionsreferenzachse $\mathbf{e}_L$ einen Korrektionstorsionswinkel $\psi_K$ einschließt, der von einem Referenztorsionswinkel $\psi_0$ zwischen der Zylinderreferenzachse $\alpha_0$ und der Torsionsreferenzachse $\mathbf{e}_L$ um einen Torsionskorrekturwinkel

$$\psi_\Delta = \frac{(\sin\vartheta)\Delta\varphi}{1 + \cos\vartheta\cos\left(\varphi + \dfrac{\Delta\varphi}{2}\right)}$$

abweicht, welcher vom ersten Helmholtz-Winkel $\vartheta$ und dem zweiten Helmholtz-Winkel $\varphi$ für die der zumindest einen Bewertungsstelle $i_b$ entsprechenden Blickrichtung $-\mathbf{e}_\zeta$ des Auges sowie von einem Konvergenzwinkels $\Delta\varphi$ gemäß

$$\Delta\varphi = -\frac{PD - a_i\left(\Delta d_y S_{xy} + \Delta\mathrm{Pr}_0\right)}{a_i - b'\left(1 + a_i S_{xx}\right)}$$

in Abhängigkeit von einer Pupillendistanz $PD$ des Brillenträgers, eines Drehpunkt-Scheitelabstands $b'$ und Komponenten $S_{xx}$ und $S_{xy}$ einer Brechwertmatrix $\mathbf{S} = \begin{pmatrix} S_{xx} & S_{xy} \\ S_{xy} & S_{yy} \end{pmatrix}$ des Brillenglases abhängt, wobei der Wert $\Delta\mathrm{Pr}_0$ eine prismatische Wirkung und der Wert $\Delta d_y$ eine Differenz der vertikalen Blicksenkung zwischen linkem und rechtem Auge bezeichnet.

Dabei sind die Helmholtz-Winkel in üblicher Weise derart zu verstehen, dass die Referenzblickrichtung $-\mathbf{e}_z$ des Auges durch eine Kombination einer ersten Rotation des Auges um eine zur Referenzblickrichtung $-\mathbf{e}_z$ des Auges senkrechte, horizontale erste Drehachse $\mathbf{e}_x$ (insbesondere durch den Augendrehpunkt) des Auges (erste Basisachse des Auges) um den ersten Helmholtz-Winkel $\vartheta$ und einer zweiten Rotation des Auges um eine zweite Drehachse $\mathbf{e}_{y,H}$ des Auges um den zweiten Helmholtz-Winkel $\varphi$ in die der zumindest einen Bewertungsstelle $i_b$ des Brillenglases entsprechenden Blickrichtung $-\mathbf{e}_\zeta$ des Auges übergeht, wobei die zweite Drehachse $\mathbf{e}_{y,H}$ des Auges eine gegenüber einer zur Referenzblickrichtung $-\mathbf{e}_z$ des Auges und zur ersten Drehachse $\mathbf{e}_x$ senkrechten Achse $\mathbf{e}_y$ (insbesondere durch den Augendrehpunkt; zweite Basisachse des Auges) um die erste Drehachse $\mathbf{e}_x$ um den ersten Helmholtz-Winkel $\vartheta$ rotierte Achse ist. Dabei umfasst das Verfahren vorzugsweise ein Ermitteln der der zumindest einen Bewertungsstelle $i_b$ des Brillenglases entsprechenden Blickrichtung $-\mathbf{e}_\zeta$ des Auges, wobei das Ermitteln der Blickrichtung $-\mathbf{e}_\zeta$ vorzugsweise in Ermitteln des ersten und zweiten Helmholtz-Winkels umfasst.

Durch das erfindungsgemäße Verfahren wird im Vergleich zu herkömmlichen Verfahren, welche insbesondere keine Korrektur einer Augentorsion bei Blickbewegungen berücksichtigen oder die Blickrichtung des anderen Auges unberücksichtigt lassen, eine wesentliche Verbesserung der optischen Anpassung des Brillenglases für den Benutzer insbesondere für die Benutzung in der Nähe erreicht. Anders als in dem in WO 2010/054817 A1 beschriebenen Verfahren ist es im erfindungsgemäßen Verfahren aber nicht mehr notwendig, das andere Brillenglas zu kennen oder eine vollständige Strahldurchrechnung für das andere Auge vorzunehmen. Stattdessen haben die Erfinder überraschenderweise festgestellt, dass bereits eine sehr gute Korrektur der astigmatischen Refraktion in der Nähe auch durch die erfindungsgemäße Transformation der Augentorsion erreicht werden kann, ohne dass eine vollständige Strahldurchrechnung für das jeweils andere Auge notwendig ist. Damit konnte gegenüber jenem Verfahren eine deutliche Verringerung des Rechenaufwands beim Optimieren des Brillenglases und eine entsprechend schnellere und kostengünstigere Optimierung und Herstellung des Brillenglases erreicht werden.

In einem Aspekt wird somit insbesondere eine Transformation der Achslage des zu korrigierenden Astigmatismus vorgenommen. Es fließt also insbesondere in die Zielfunktion nicht für alle Bewertungsstellen dieselbe Achslage, insbesondere die für eine Referenzblickrichtung in den Verordnungsdaten des Brillenträger festlegte Achslage, ein, sondern es wird für zumindest eine von der Referenzblickrichtung abweichende Blickrichtung eine um den Torsionskorrekturwinkel korrigierte (also transformierte) Achslage bei der Minimierung der Zielfunktion zugrunde gelegt.

Dabei wurde erfindungsgemäß eine besonders effiziente Transformation der Achslage gefunden, die für eine bestimmte Gebrauchssituation nur von den Daten für das zu optimierende Brillenglas sowie dem Pupillenabstand *PD* und eventuell bzw. gegebenenfalls noch von einer prismatischen Wirkung abhängt. Dies lässt sich wie folgt anschaulich erklären, wobei vergleichend, insbesondere in Bezug auf das Verständnis der Helmholtz-Koordinaten, auf WO 2010/054817 A1 verwiesen wird.

Für schräge bzw. diagonale Blickrichtungen des Auges wird beispielsweise ein festes verkipptes Koordinatensystem beschrieben, in dem die Wellenfront dargestellt wird, und das in eine geeignete Verbindung mit dem Basiskoordinatensystem in Geradeausblickrichtung gebracht wird, auf welches sich vorzugsweise die Refraktionsdaten beziehen.

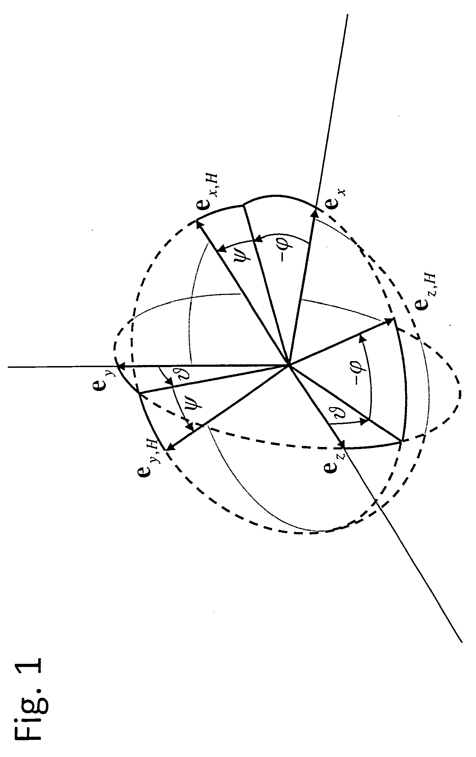

Insbesondere wird dieser Koordinatenübergang durch Helmholtz-Koordinaten $(\varphi, \vartheta, \psi)$ geeignet beschrieben. In anderen bevorzugten Ausführungsformen könnte auch eine andere Darstellung, wie z.B. Fick-Koordinaten oder Euler-Winkel, verwendet werden. Im Folgenden wird eine bevorzugte Verwendung der Helmholtz-Koordinaten beispielhaft beschrieben, wobei zur Veranschaulichung auf Fig. 1 verwiesen wird.

Damit umfasst das Ermitteln einer Blickrichtung $-\mathbf{e}_\zeta$ des Auges vorzugsweise ein Ermitteln eines ersten Helmholtz-Winkels $\vartheta$ des Auges und eines zweiten Helmholtz-Winkels $\varphi$ des Auges. Diese Winkel werden insbesondere derart ermittelt, dass die Referenzblickrichtung $-\mathbf{e}_z$ des Auges durch eine Kombination

- einer ersten Rotation des Auges um eine erste Drehachse $\mathbf{e}_x$ (erste Basisachse des Auges) um den ersten Helmholtz-Winkel $\vartheta$ und
- einer zweiten Rotation des Auges um eine zweite Drehachse $\mathbf{e}_{y,H}$ um den zweiten Helmholtz-Winkel $\varphi$

in die entsprechende Blickrichtung - $\mathbf{e}_\zeta$ des Auges übergeht.

Dabei steht die erste Drehachse $\mathbf{e}_x$ zur Referenzblickrichtung $-\mathbf{e}_z$ des Auges senkrecht und verläuft in der bestimmten Gebrauchssituation (insbesondere bei der gewohnt geraden Kopfhaltung des Brillenträgers) horizontal durch den Augendrehpunkt des Auges. Die zweite Drehachse $\mathbf{e}_{y,H}$ des Auges ist dabei als eine Achse festgelegt, die sich aus einer zweiten Basisachse $\mathbf{e}_y$ des Auges durch Rotation um die erste Drehachse $\mathbf{e}_x$ des Auges um den ersten Helmholtz-Winkel $\vartheta$ des Auges ergibt, d.h. dass die um die erste Drehachse $\mathbf{e}_x$ des Auges um den ersten Helmholtz-Winkel $\vartheta$ des Auges gedrehte zweite Basisachse $\mathbf{e}_y$ mit der zweiten Drehachse $\mathbf{e}_{y,H}$ zusammenfällt. Die zweite Basisachse $\mathbf{e}_y$ des Auges wiederum steht sowohl zur Referenzblickrichtung $-\mathbf{e}_z$ des Auges als auch zur ersten Drehachse $\mathbf{e}_x$ des Auges senkrecht.

Es wird also vorzugsweise neben dem ortfesten Basiskoordinatensystem $(\mathbf{e}_x, \mathbf{e}_y, \mathbf{e}_z)$ ein augenfestes Koordinatensystem bzw. ein mitbewegtes Dreibein $(\mathbf{e}_{x,H}, \mathbf{e}_{y,H}, \mathbf{e}_{z,H})$ definiert, das aus den Basisvektoren des Basiskoordinatensystems durch Anwendung der Helmholz-Matrix $\mathbf{H}$ hervorgeht:

$$\mathbf{e}_{x,H} = \mathbf{H}(\vartheta, \varphi, \psi) \cdot \mathbf{e}_x \qquad \mathbf{e}_{y,H} = \mathbf{H}(\vartheta, \varphi, \psi) \cdot \mathbf{e}_y \qquad \mathbf{e}_{z,H} = \mathbf{H}(\vartheta, \varphi, \psi) \cdot \mathbf{e}_z$$

mit

$$\mathbf{H}(\vartheta, \varphi, \psi) := \mathbf{H}_x(\vartheta)\mathbf{H}_y(-\varphi)\mathbf{H}_z(\psi)$$

wobei

$$\mathbf{H}_x(\vartheta) := \begin{pmatrix} 1 & 0 & 0 \\ 0 & \cos\vartheta & -\sin\vartheta \\ 0 & \sin\vartheta & \cos\vartheta \end{pmatrix}$$

$$\mathbf{H}_y(\varphi) := \begin{pmatrix} \cos\varphi & 0 & \sin\varphi \\ 0 & 1 & 0 \\ -\sin\varphi & 0 & \cos\varphi \end{pmatrix}$$

$$\mathbf{H}_x(\vartheta) := \begin{pmatrix} \cos\psi & -\sin\psi & 0 \\ \sin\psi & \cos\psi & 0 \\ 0 & 0 & 1 \end{pmatrix}$$

Die Winkel $\varphi$ und $\vartheta$ legen die Blickrichtung fest, während der Winkel $\psi$ die Torsionseinstellung des Auges beschreibt. Der Vektor $\mathbf{HS} = \mathbf{e}_\zeta$ bezeichnet in der Definition des mitbewegten Dreibeins den Vektor des augenseitigen Hauptstrahls für das Auge. Da er mit der Blickrichtung fest gekoppelt ist, lassen sich aus dem Vektor HS die beiden Blickwinkel $\varphi$ und $\vartheta$ rekonstruieren nach

$$\varphi = -\arcsin \mathbf{HS}_x, \qquad -\frac{\pi}{2} < \varphi < \frac{\pi}{2}$$

$$\vartheta = -\arctan \frac{\mathbf{HS}_y}{\mathbf{HS}_z}, \qquad -\frac{\pi}{2} < \vartheta < \frac{\pi}{2}$$

Der dritte Winkel $\psi$ lässt sich hingegen nicht aus der Blickrichtung ableiten, sondern entsteht stattdessen durch eine geeignete Torsionseinstellung des Auges. Hierfür gibt es verschiedene physiologische Modelle. Beispielsweise wird ein Modell, bei dem gefordert wird, dass die Endposition des Auges dadurch festgelegt wird, dass das Auge aus der Nullblickrichtung durch Rotation um die Torsionsreferenzachse $\mathbf{e}_L$ in die endgültige Position gebracht wird, wobei die Torsionsreferenzachse $\mathbf{e}_L$ dadurch ausgezeichnet ist, dass sie ganz in einer Ebene liegt, die senkrecht zur Nullblickrichtung steht, als Listing'sches Modell oder Listing'sche Regel "L1" bzw. Listing'sche Regel für die Ferne bezeichnet, da sie nur für den Blick in die Ferne ein gute Näherung bietet. Insbesondere ist die Torsionsreferenzachse $\mathbf{e}_L$ in Helmholtz-Koordinaten durch

$$\mathbf{e}_L = \frac{1}{1 + \tan\frac{\varphi}{2}\tan\frac{\vartheta}{2}\tan\frac{\psi}{2}} \begin{pmatrix} \tan\frac{\vartheta}{2} - \tan\frac{\psi}{2}\tan\frac{\varphi}{2} \\ -\tan\frac{\varphi}{2} - \tan\frac{\vartheta}{2}\tan\frac{\psi}{2} \\ \tan\frac{\psi}{2} - \tan\frac{\varphi}{2}\tan\frac{\vartheta}{2} \end{pmatrix}$$

gegeben, wobei die letzte Komponente der Achse $\mathbf{e}_L$ verschwindet, also

$$\tan\frac{\psi}{2} - \tan\frac{\varphi}{2}\tan\frac{\vartheta}{2} = 0 \quad \Leftrightarrow \quad \psi_{Helmholtz}(\varphi,\vartheta) = 2\arctan\left(\tan\frac{\varphi}{2}\tan\frac{\vartheta}{2}\right)$$

d.h. der Torsionswinkel $\psi$ lässt sich gemäß der Listing'schen Regel L1 als Funktion der Blickwinkel auffassen.
So wird in WO 2010/054817 A1 offenbart, wie die Daten der beiden augenseitigen Hauptstrahlen verwendet werden, um die Torsionswinkel beider Augen aufgrund der Listing'schen Regel für die Nähe (auch Listing'sche Regel L2 bezeichnet) zu bestimmen. Dieses Verfahren setzt jedoch voraus, dass zu jedem Durchblickspunkt ein Paar korrespondierender Hauptstrahlen bekannt ist. Die Berechnung solcher Hauptstrahlpaare ist im Vergleich zur vorliegenden Erfindung rechenzeitaufwändig und setzt zudem die simultane Kenntnis beider Gläser voraus. Erfindungsgemäß wird nun ein näherungsweises Vorgehen vorgeschlagen, das mit den Daten eines einzelnen Glases auskommt und somit insbesondere ohne die Berechnung eines Hauptstrahlpaares auskommt.

Der Konvergenzwinkel $\Delta\varphi$ geht folgendermaßen in die Torsionsbeschreibung aufgrund der Listing'schen Regel für die Nähe ein. Dabei wird in WO 2010/054817 A1 zunächst offenbart, dass sich in Helmholtz-Koordinaten die Augenstellungen durch die beiden Torsionswinkel

$$\psi^{(l)}_{korrigiert} = \psi^{(r)}_{korrigiert} = \frac{\psi_{Helmholtz}(\varphi^{(l)}, \vartheta^{(l)}) + \psi_{Helmholtz}(\varphi^{(r)}, \vartheta^{(r)})}{2} \tag{5}$$

beschreiben lassen, wobei die Funktion durch

$$\psi_{Helmholtz}(\varphi, \vartheta) = 2\arctan\left(\tan\frac{\varphi}{2}\tan\frac{\vartheta}{2}\right) \tag{6}$$

gegeben ist. Gleichung (5) kann man umstellen nach

$$\psi^{(l)}_{korrigiert} = \psi_{Helmholtz}(\varphi^{(l)}, \vartheta^{(l)}) - \Delta\psi_{Helmholtz}(\varphi^{(r)}, \vartheta^{(r)}, \varphi^{(l)}, \vartheta^{(l)})$$
$$\psi^{(r)}_{korrigiert} = \psi_{Helmholtz}(\varphi^{(r)}, \vartheta^{(r)}) + \Delta\psi_{Helmholtz}(\varphi^{(r)}, \vartheta^{(r)}, \varphi^{(l)}, \vartheta^{(l)}) \tag{7}$$

mit dem Torsionskorrekturwinkel

$$\Delta\psi_{Helmholtz}(\varphi^{(r)}, \vartheta^{(r)}, \varphi^{(l)}, \vartheta^{(l)}) := \frac{\psi_{Helmholtz}(\varphi^{(l)}, \vartheta^{(l)}) - \psi_{Helmholtz}(\varphi^{(r)}, \vartheta^{(r)})}{2} \tag{7a}$$

Führt man nun noch ein Zyklopenauge ein durch die Mittelwerte

$$\varphi^{(Z)} = \frac{\varphi^{(l)} + \varphi^{(r)}}{2} \qquad \Leftrightarrow \qquad \varphi^{(l)} = \varphi^{(Z)} + \frac{\Delta\varphi}{2}$$
$$\Delta\varphi = \varphi^{(l)} - \varphi^{(r)} \qquad\qquad\qquad \varphi^{(r)} = \varphi^{(Z)} - \frac{\Delta\varphi}{2} \tag{8a}$$

und

$$\vartheta^{(Z)} = \frac{\vartheta^{(l)} + \vartheta^{(r)}}{2} \qquad \Leftrightarrow \qquad \vartheta^{(l)} = \vartheta^{(Z)} + \frac{\Delta\vartheta}{2}$$
$$\Delta\vartheta = \vartheta^{(l)} - \vartheta^{(r)} \qquad\qquad\qquad \vartheta^{(r)} = \vartheta^{(Z)} - \frac{\Delta\vartheta}{2}, \tag{8b}$$

und setzt die Winkel $\varphi^{(r)}, \vartheta^{(r)}, \varphi^{(l)}, \vartheta^{(l)}$ in die Gleichungen (7, 7a) ein, dann erhält man die nach Listing für die Nähe korrigierten Torsionswinkel $\psi^{(l)}_{korrigiert}, \psi^{(r)}_{korrigiert}$ als Funktion der Blickrichtungswinkel $\varphi^{(Z)}, \vartheta^{(Z)}$ des Zyklopenauges, des Konvergenzwinkels $\Delta\varphi$ und des Winkels $\Delta\vartheta$. Sind insbesondere die Winkel $\Delta\varphi, \Delta\vartheta$ hinreichend klein, dann kann Gleichung (7a) für den Torsionskorrekturwinkel in eine Reihe entwickelt werden gemäß

$$\Delta\psi_{Helmholtz}(\varphi^{(r)},\vartheta^{(r)},\varphi^{(l)},\vartheta^{(l)}) := \frac{\left(\sin\vartheta^{(Z)}\right)\Delta\varphi + \left(\sin\varphi^{(Z)}\right)\Delta\vartheta}{1+\cos\vartheta^{(Z)}\cos\varphi^{(Z)}} + O(\Delta^3) \qquad , \qquad (9)$$

wobei der Ausdruck $O(\Delta^3)$ alle Terme $\Delta\varphi^p\Delta\vartheta^q$ umfasst, für die $p+q=3$ ist, also $\Delta\varphi^3$, $\Delta\varphi^2\Delta\vartheta$, $\Delta\varphi\Delta\vartheta^2$, $\Delta\vartheta^3$.

Liegt insbesondere eine Situation mit $\Delta\vartheta=0$ vor, dann ist $\vartheta^{(Z)} = \vartheta^{(l)} = \vartheta^{(r)}$, und der Torsionskorrekturwinkel kann nach Gleichung (9) allein durch den Konvergenzwinkel beschrieben werden:

$$\Delta\psi_{Helmholtz}(\varphi^{(r)},\vartheta^{(r)},\varphi^{(l)},\vartheta^{(l)}) := \frac{\left(\sin\vartheta^{(Z)}\right)\Delta\varphi}{1+\cos\vartheta^{(Z)}\cos\varphi^{(Z)}} + O(\Delta\varphi^3) \qquad (9a)$$

Identifiziert man die Bezeichnungen $\varphi^{(r)}$, $\vartheta^{(r)}$, $\varphi^{(l)}$, $\vartheta^{(l)}$ aus WO 2010/054817 A1 mit den entsprechenden Bezeichnungen $\varphi_l$, $\vartheta_r$, $\varphi^{(l)}$, $\vartheta^{(l)}$ aus der vorliegenden Beschreibung, und ersetzt man die Blickwinkel des Zyklopenauges wieder durch die des vorliegenden Auges, $\vartheta^{(z)} = \vartheta_l$ und $\varphi^{(Z)} = \varphi_l - \dfrac{\Delta\varphi}{2}$ für das linke Auge bzw. $\vartheta^{(z)} = \vartheta_r$ und $\varphi^{(Z)} = \varphi_r + \dfrac{\Delta\varphi}{2}$ für das rechte Auge, dann erhält man für das linke Auge

$$\Delta\psi_{Helmholtz}(\varphi_l,\vartheta_l) := \frac{(\sin\vartheta_l)\Delta\varphi}{1+\cos\vartheta_l\cos(\varphi_l - \Delta\varphi/2)} + O(\Delta\varphi^3) \qquad (9b)$$

ausgedrückt nur durch Größen, die durch die Blickwinkel des linken Hauptstrahls und den Konvergenzwinkel bestimmt sind, und für das rechte Auge

$$\Delta\psi_{Helmholtz}(\varphi_r,\vartheta_r) := \frac{(\sin\vartheta_r)\Delta\varphi}{1+\cos\vartheta_r\cos(\varphi_r + \Delta\varphi/2)} + O(\Delta\varphi^3) \qquad (9c)$$

ausgedrückt nur durch Größen, die durch die Blickwinkel des rechten Hauptstrahls und den Konvergenzwinkel bestimmt sind.

Man braucht also nur den Konvergenzwinkel zu bestimmen und kann daraus mit den oben aufgeführten Gleichungen (9b) und (9c) die zusätzliche Torsionsbewegung des Auges gegenüber dem Modeln "Listing 1" und damit in einfacher Weise die benötigte Achslage berechnen.

Hierzu wird ausgenutzt, dass sich der Konvergenzwinkel $\Delta\varphi$ abschätzen lässt, wenn man den Objektabstand $-a_1 > 0$ (in einer Bewertungsstelle $i_b = 1$), die Pupillendistanz $PD$ und die (als identisch angenommenen) dioptrischen und prismatischen Wirkungen der Gläser kennt und die lokale prismatische Wirkung mit Hilfe der Prentice'schen Regel abschätzt.

Ein entsprechender Ansatz zeichnet sich dadurch aus, dass für die Berechnung des Konvergenzwinkels nur die Pupillendistanz $PD$, der Objektabstand $a_1$ und die sphärische Wirkung $S$ benötigt werden.

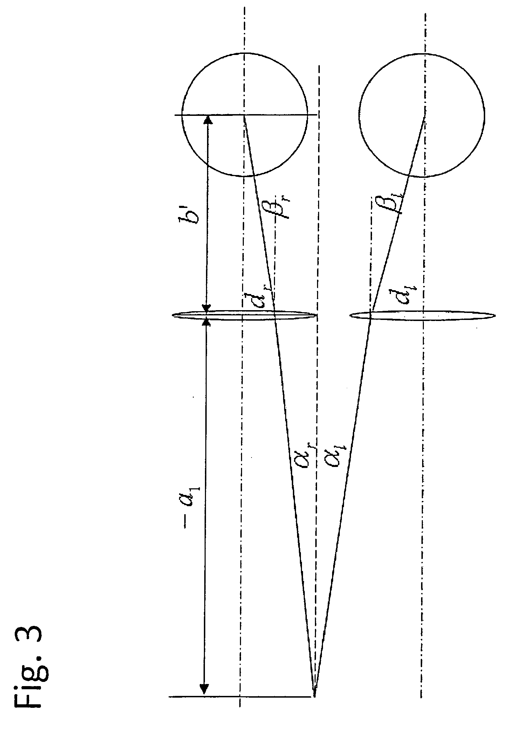

Für ein rein sphärisches Glas liefert mit den in Fig. 3 dargestellten Größen die Prentice'sche Regel separat für links und rechts in paraxialer Näherung:

$$\begin{aligned} \mathrm{Pr}_r &:= \varphi_r - \alpha_r = S \cdot d_r \\ \mathrm{Pr}_l &:= \varphi_l - \alpha_l = S \cdot d_l \end{aligned} \qquad (10)$$

Hierbei steht $S$ wahlweise für die sphärische Rezeptwirkung, den Scheitelbrechwert $S'_\infty$ oder eine andere

Größe, die die dioptrische Wirkung des Glases beschreibt. Subtraktion liefert:

$$\left(\varphi_l - \varphi_r\right) - \left(\alpha_l - \alpha_r\right) = S \cdot \left(d_l - d_r\right) \tag{11}$$

Ersetzt man nun paraxial $\alpha_r \approx \dfrac{-PD/2 - d_r}{-a_1}$ und $\alpha_l \approx \dfrac{PD/2 - d_l}{-a_1}$ sowie $d_r \approx b'\varphi_r$ und $d_l \approx b'\varphi_l$, so kann man nach $\Delta\varphi = \varphi_l - \varphi_r$ auflösen und erhält:

$$\Delta\varphi = \frac{PD}{b' - a_1(1 - b'S)}$$
$$= -\frac{PD}{a_1 - b'(1 + a_1 S)} \tag{12}$$

Damit ist es möglich, sehr schnell und mit wenigen Parametern (Pupillendistanz *PD,* die sphärische Wirkung *S* und den Objektabstand $a_1$) den Konvergenzwinkel zu berechnen.

In einem weiteren Ansatz wird für die Berechnung des Konvergenzwinkels zusätzlich die verordnete prismatische Wirkung $Pr_v$ berücksichtigt. Die Horizontalkomponente des verordneten Prismas $Pr_0$ ist dann für rechts und links gegeben durch

$$Pr_{0,r} = Pr_v \cos\beta_r$$
$$Pr_{0,l} = Pr_v \cos\beta_l \tag{13}$$

wobei $\beta$ jeweils für rechts und links die Basislage darstellt. Nach Fig. 3 liefert die Prentice'sche Regel separat für links und rechts in paraxialer Näherung:

$$Pr_r := \varphi_r - \alpha_r = S \cdot d_r + Pr_{0,r}$$
$$Pr_l := \varphi_l - \alpha_l = S \cdot d_l + Pr_{0,l} \tag{14}$$

Subtraktion liefert:

$$\left(\varphi_l - \varphi_r\right) - \left(\alpha_l - \alpha_r\right) = S \cdot \left(d_l - d_r\right) + \Delta Pr_0 \tag{15}$$

mit $\Delta Pr_0 := Pr_{0,l} - Pr_{0,r}.$ Analog zu Gleichung (12) erhält man dann

$$\Delta\varphi = \frac{PD - a_1 \Delta Pr_0}{b' - a_1(1 - b'S)}$$
$$= -\frac{PD - a_1 \Delta Pr_0}{a_1 - b'(1 + a_1 S)}. \tag{16}$$

Damit ist es nun möglich, sehr schnell und mit wenigen Parametern (Pupillendistanz *PD,* prismatische Wirkung Pr, Objektabstand $a_1$ und sphärische Wirkung *S*) den Konvergenzwinkel zu berechnen. Durch die Berücksichtung der prismatischen Wirkung wird das Verfahren exakter, insbesondere im Fall eines verordneten Prismas.

In einem weiteren Ansatz wird für die Berechnung des Konvergenzwinkels neben der sphärischen Wirkung auch die zylindrische Wirkung berücksichtigt. Im allgemeinen sphäro-zylindrischen Fall ändert sich dieser gegenüber dem Ansatz von Gleichung (10) gemäß

$$\text{Pr}_r := \varphi_r - \alpha_r = \begin{pmatrix} S_{xx} & S_{xy} \end{pmatrix} \begin{pmatrix} d_{r,x} \\ d_{r,y} \end{pmatrix}$$

$$\text{Pr}_l := \varphi_l - \alpha_l = \begin{pmatrix} S_{xx} & S_{xy} \end{pmatrix} \begin{pmatrix} d_{l,x} \\ d_{l,y} \end{pmatrix} \tag{17}$$

Hierbei steht die Matrix

$$\mathbf{S} = \begin{pmatrix} S_{xx} & S_{xy} \\ S_{xy} & S_{yy} \end{pmatrix}$$

wahlweise für die Matrixform der sphärischen Rezeptwirkung, die Scheitelbrechwertmatrix $S'_\infty$ oder eine andere Matrix, die die sphärozylindrische Wirkung des Glases beschreibt.

Das Ergebnis lautet dann

$$\Delta\varphi = -\frac{PD - a_1(d_{l,y} - d_{r,y})S_{xy}}{a_1 - b'(1 + a_1 S_{xx})} \tag{18}$$

Unter der Annahme gleicher Blicksenkungen links wie rechts erhält man hierfür

$$\Delta\varphi = -\frac{PD}{a_1 - b'(1 + a_1 S_{xx})} \tag{19}$$

weil dann $\Delta d_y = (d_{l,y} - d_{r,y}) = 0$ ist.

Damit ist es möglich, sehr schnell und mit wenigen Parametern (Pupillendistanz *PD*, sphäro-zylindrische Wirkung S und Objektabstand $a_1$) den Konvergenzwinkel zu berechnen.

In einem weiteren Ansatz wird für die Berechnung des Konvergenzwinkels neben der sphärischen Wirkung auch die zylindrische und prismatische Wirkung berücksichtigt. Im allgemeinen sphäro-zylindrischen Fall mit Verordnungsprisma kommt zu Gleichung (17) noch ein Term mit dem verordneten Horizontalprisma hinzu, d.h. mit

$$\text{Pr}_{0,r} = \text{Pr}_v \cos\alpha_r$$

$$\text{Pr}_{0,l} = \text{Pr}_v \cos\alpha_l \tag{20}$$

Dann gilt:

$$\text{Pr}_r := \varphi_r - \alpha_r = \begin{pmatrix} S_{xx} & S_{xy} \end{pmatrix} \begin{pmatrix} d_{r,x} \\ d_{r,y} \end{pmatrix} + \text{Pr}_{0,r}$$

$$\text{Pr}_l := \varphi_l - \alpha_l = \begin{pmatrix} S_{xx} & S_{xy} \end{pmatrix} \begin{pmatrix} d_{l,x} \\ d_{l,y} \end{pmatrix} + \text{Pr}_{0,l} \tag{21}$$

Das Ergebnis lautet dann

**14**

$$\Delta \varphi = -\frac{PD - a_1\left((d_{l,y} - d_{r,y})S_{xy} + \Delta \mathrm{Pr}_{0x}\right)}{a_1 - b'(1 + a_1 S_{xx})} \tag{22}$$

Damit ist es möglich, sehr schnell und exakt den Konvergenzwinkel zu berechnen.

In einem weiteren Ansatz wird nicht wie in Gleichung (18) eine ausdrückliche Annahme über die Differenz $\Delta d_y = (d_{l,y} - d_{r,y})$ getroffen, sondern diese Differenz wird vorzugsweise wie folgt eliminiert. Dabei erhält man ein gemeinsames Resultat für die beiden Winkel $\Delta \varphi$ und $\Delta \vartheta$:

$$\Delta \varphi = \frac{-a_y PD}{a_x a_y - a_1^2 b'^2 S_{xy}^2}$$

$$\Delta \vartheta = \frac{-a_1 b' S_{xy} PD}{a_x a_y - a_1^2 b'^2 S_{xy}^2} \tag{18a}$$

Hierbei sind folgende Abkürzungen eingeführt:

$$a_x = a_1 - b'\left(1 + a_1 S_{xx}\right)$$

$$a_y = a_1 - b'\left(1 + a_1 S_{yy}\right)$$

In einem weiteren Ansatz wird nicht wie in Gleichung (22) eine ausdrückliche Annahme über die Differenz $\Delta d_y = (d_{l,y} - d_{r,y})$ getroffen, sondern diese Differenz wird vorzugsweise wie folgt eliminiert. Dabei erhält man ein gemeinsames Resultat für die beiden Winkel $\Delta \varphi$ und $\Delta \vartheta$:

$$\Delta \varphi = \frac{a_y\left(a_1 \Delta \mathrm{Pr}_0 - PD\right) + a_1^2 b' S_{xy} \Delta \mathrm{Pr}_{90}}{a_x a_y - a_1^2 b'^2 S_{xy}^2}$$

$$\Delta \vartheta = \frac{a_1 b' S_{xy}\left(a_1 \Delta \mathrm{Pr}_0 - PD\right) - a_1 a_x \Delta \mathrm{Pr}_{90}}{a_x a_y - a_1^2 b'^2 S_{xy}^2} \tag{18a}$$

Dabei sind die oben genannten Abkürzungen für $a_x$ und $a_y$ verwendet. Analog zur bereits weiter oben eingeführten Differenz $\Delta \mathrm{Pr}_0$ der Horizontalkomponente des verordneten Prismas links und rechts stellt $\Delta \mathrm{Pr}_{90}$ die Differenz der Vertikalkomponenten des verordneten Prismas dar.

Im Fall eines beliebigen asymmetrischen Glases, insbesondere eines Gleitsichtglases, variiert die Größe $S$ bzw. $\mathbf{S}$ über das Brillenglas, und die Prentice'sche Regel müsste streng genommen in Form eines Integrals angewendet werden. Erfindungsgemäß ist aber erkannt worden, dass sich bereits die Gleichungen (12, 16, 18, 19 und 22) dennoch sehr gut eignen, um den Konvergenzwinkel zu berechnen. Hierbei wird für $S$ bzw. S vorzugsweise ein Mittelwert zwischen dem lokalen Wert am Durchblickspunkt und dem Wert am Prismenbezugspunkt eingesetzt. Als weitere Möglichkeit können statt dieser Mittelwerte auch direkt die Werte von $S$ bzw. $\mathbf{S}$ am Durchblickspunkt (Durchstoßpunkt des Hauptstrahls) selbst oder am Prismenbezugspunkt gewählt werden. Alternativ können auch die Verordnungswerte benutzt werden.

Das erfindungsgemäße Verfahren ermöglicht es somit, dass der Augenoptiker, Optometrist oder Augenarzt über die gewöhnlichen monokularen Refraktionsbestimmung hinaus keine zusätzliche Messung durchführen muss, keine weiteren Daten an den Brillenglashersteller übermittelt werden müssen und der Brillenglashersteller mit oben aufgeführten Gleichungen ein Brillenglas mit verbesserten Eigenschaften für die Nähe ohne zusätzliches Ray-Tracing berechnen kann.

Vorzugsweise wird im Fall des Ermitteins einer transformierten Zylinderachse $\alpha_j$ diese derart ermittelt, dass der Wert $\Delta \mathrm{Pr}_0$ der prismatische Wirkung der Differenz der Horizontalkomponenter der prismatischen Verordnungen für das linke und rechte Auge entspricht.

Es ist dabei nicht unbedingt notwendig, die tatsächliche prismatische Wirkung explizit zu berücksichtigen, um eine Verbesserung der astigmatischen Korrektur zu erreichen. Falls keine prismatische Wirkung vorliegt oder berücksichtigt werden soll, wird vorzugsweise $\Delta Pr_0 = 0$ und/oder $\Delta Pr_{90} = 0$ gesetzt. Demnach wird in einer weiteren bevorzugten Ausführungsform im Fall des Ermitteins einer transformierten Zylinderachse $\alpha_i$ diese derart ermittelt, dass der Torsionskorrekturwinkel $\psi_\Delta$ vom Konvergenzwinkel $\Delta\varphi$ gemäß

$$\Delta\varphi = \frac{PD}{a_1 - b'(1 + a_1 S)}$$

in Abhängigkeit von der Pupillendistanz $PD$ des Brillenträgers, des Drehpunkt-Scheitelabstands $b'$ und einer sphärischen Wirkung S des Brillenglases abhängt.

In einer bevorzugten Ausführungsform wird im Fall des Ermitteins einer transformierten Zylinderachse $\alpha_i$ diese derart ermittelt wird, dass als sphärische Wirkung S des Brillenglases, von welcher einem Konvergenzwinkels $\Delta\varphi$ gemäß

$$\Delta\varphi = \frac{PD - a_1 \Delta Pr_0}{a_1 - b'(1 + a_1 S)}$$ abhängt, die sphärische Wirkung $S_0$ der Verordnung für den Brillenträger verwendet wird.

Diese steht unmittelbar zur Verfügung und erfordert keinen zusätzlichen, insbesondere iterativen Berechungsschritt, weshalb das Verfahren zu einer besonders schnellen Optimierung führt.

In einer anderen bevorzugten Ausführungsform wird im Fall des Ermitteins einer transformierten Zylinderachse $\alpha_i$ diese derart ermittelt, dass als sphärische Wirkung S des Brillenglases, von welcher einem Konvergenzwinkels $\Delta\varphi$

gemäß $\Delta\varphi = \dfrac{PD - a_1 \Delta Pr_0}{a_1 - b'(1 + a_1 S)}$ abhängt, die sphärische Wirkung $S_i$ an der Bewertungsstelle $i_b$ verwendet wird. Damit wird eine besonders gute Anpassung an die lokalen Eigenschaften des Brillenglases erreicht, was zu einer gegenüber einem konstanten Wert der sphärischen Wirkung verbesserten optischen Eigenschaft führt.

In einer weiteren bevorzugten Ausführungsform wird im Fall des Ermitteins einer transformierten Zylinderachse $\alpha_i$ diese derart ermittelt wird, dass als sphärische Wirkung S des Brillenglases, von welcher einem Konvergenzwinkels

$\Delta\varphi$ gemäß $\Delta\varphi = \dfrac{PD - a_1 \Delta Pr_0}{a_1 - b'(1 + a_1 S)}$ abhängt, ein Mittelwert zwischen der sphärischen Wirkung $S_i$ an der Bewertungsstelle $i_b$ und der sphärischen Wirkung an einem Bezugspunkt des Brillenglases, insbesondere dem Prismenbezugspunkt oder dem Fernbezugspunkt, verwendet wird. Dies erfordert zwar ebenfalls für jede Bewertungsstelle eine eigene Berechnung der bei der Bestimmung des Konvergenzwinkels zu berücksichtigenden sphärischen Wirkung, bietet aber eine sehr gute Annäherung an die bei exakter Berechung erforderlichen, dafür aber wesentlich aufwändigeren Integration, wie zuvor bereits erwähnt.

Außerdem stellt die Erfindung ein Computerprogrammerzeugnis bereit, welches Programmteile enthält, welche ausgelegt sind, wenn geladen und ausgeführt auf einem Computer, ein Verfahren zur Optimierung eines Brillenglases für eine bestimmte Gebrauchssituation zur Korrektion zumindest einer astigmatischen Refraktion eines Auges eines Brillenträgers, welche in einer Referenzblickrichtung

- $\mathbf{e}_z$ des Auges einen Zylinderreferenzwert $Z_0$ und eine Zylinderreferenzachse $\alpha_0$ aufweist, umfassend einen Berechnungs- bzw. Optimierungsschritt des Brillenglases, welcher umfasst:

  - Bestimmen einer Objektentfernung $a_i$ für zumindest eine Bewertungsstelle $\boldsymbol{i}_b$ des Brillenglases;
  - Ermitteln einer transformierten astigmatischen Refraktion für die zumindest eine Bewertungsstelle $i_b$ des Brillenglases aus dem Zylinderreferenzwert $Z_0$ und der Zylinderreferenzachse $\alpha_0$ in Abhängigkeit von der bestimmten Objektentfernung $a_i$; rund
  - Optimieren des Brillenglases derart, dass für die zumindest eine Bewertungsstelle $\boldsymbol{i}_b$ eine Korrektion der transformierten astigmatischen Refraktion durch das Brillenglas in der bestimmten Gebrauchssituation berücksichtigt wird,

wobei das Ermitteln der transformierten astigmatischen Refraktion ein Ermitteln eines transformierten Zylinderwerts $Z_i$ in der oben beschriebenen, erfindungsgemäßen Weise und/oder ein Ermitteln einer transformierten Zylinderachse $\alpha_i$ in der oben beschriebenen, erfindungsgemäßen Weise in Abhängigkeit von der bestimmten Objektentfernung $\alpha_i$ umfasst.

Vorzugsweise umfasst das Computerprogrammerzeugnis Programmteile, welche ausgelegt sind, wenn geladen und ausgeführt auf einem Computer, ein Verfahren gemäß der vorliegenden Erfindung oder einer bevorzugten Ausführungsform davon durchzuführen.

Außerdem stellt die Erfindung ein Speichermedium mit einem darauf gespeicherten Computerprogramm bereit, wobei das Computerprogramm ausgelegt ist, wenn geladen und ausgeführt auf einem Computer, ein Verfahren zur Optimierung eines Brillenglases für eine bestimmte Gebrauchssituation zur Korrektion zumindest einer astigmatischen Refraktion eines Auges eines Brillenträgers, welche in einer Referenzblickrichtung $-\mathbf{e}_z$ des Auges einen Zylinderreferenzwert $Z_0$ und eine Zylinderreferenzachse $\alpha_0$ aufweist, umfassend einen Berechnungs- bzw. Optimierungsschritt des Brillenglases, welcher umfasst:

- Bestimmen einer Objektentfernung $a_i$ für zumindest eine Bewertungsstelle $i_b$ des Brillenglases;
- Ermitteln einer transformierten astigmatischen Refraktion für die zumindest eine Bewertungsstelle $i_b$ des Brillenglases aus dem Zylinderreferenzwert $Z_0$ und der Zylinderreferenzachse $\alpha_0$ in Abhängigkeit von der bestimmten Objektentfernung $a_i$; und
- Optimieren des Brillenglases derart, dass für die zumindest eine Bewertungsstelle $i_b$ eine Korrektion der transformierten astigmatischen Refraktion durch das Brillenglas in der bestimmten Gebrauchssituation berücksichtigt wird,

wobei das Ermitteln der transformierten astigmatischen Refraktion ein Ermitteln eines transformierten Zylinderwerts $Z_i$ in der oben beschriebenen, erfindungsgemäßen Weise und/oder ein Ermitteln einer transformierten Zylinderachse $\alpha_i$ in der oben beschriebenen, erfindungsgemäßen Weise in Abhängigkeit von der bestimmten Objektentfernung $a_i$ umfasst.

Vorzugsweise umfasst das Speichermedium Programmcode, welche ausgelegt sind, wenn geladen und ausgeführt auf einem Computer, ein Verfahren gemäß der vorliegenden Erfindung oder einer bevorzugten Ausführungsform davon durchzuführen.

Schließlich stellt die Erfindung eine Vorrichtung zur Herstellung zumindest eines Brillenglases bereit, wobei die Vorrichtung Erfassungsmittel bzw. eine Erfassungseinheit zum Erfassen von Zieldaten zumindest eines Brillenglases und Berechnungs- und Optimierungsmittel zum Berechnen und Optimieren eines Brillenglases für eine bestimmte Gebrauchssituation zur Korrektion zumindest einer astigmatischen Refraktion eines Auges eines Brillenträgers umfasst. Insbesondere ist die Erfassungseinheit bzw. sind die Erfassungsmittel ausgelegt, Rezeptdaten, wie z.B. eine astigmatische Refraktion eines Auges eines Brillenträgers, welche in einer Referenzblickrichtung $-\mathbf{e}_z$ des Auges einen Zylinderreferenzwert $Z_0$ und eine Zylinderreferenzachse $\alpha_0$ aufweist, zu erfassen. Vorzugsweise sind die Erfassungsmittel außerdem ausgelegt die bestimmte Gebrauchssituation zumindest teilweise zu erfassen bzw. festzulegen.

Die Berechnungs- und Optimierungsmittel sind dabei ausgelegt zum Berechnen und Optimieren zumindest eines Brillenglases für die bestimmte Gebrauchssituation zur Korrektion zumindest der astigmatischen Refraktion des Auges des Brillenträgers, wobei das Berechnen und Optimieren derart erfolgt, dass es einen Berechnungs-bzw. Optimierungsschritt des Brillenglases umfasst, welcher umfasst:

- Bestimmen einer Objektentfernung $a_i$ für zumindest eine Bewertungsstelle $i_b$ des Brillenglases;
- Ermitteln einer transformierten astigmatischen Refraktion für die zumindest eine Bewertungsstelle $i_b$ des Brillenglases aus dem Zylinderreferenzwert $Z_0$ und der Zylinderreferenzachse $\alpha_0$ in Abhängigkeit von der bestimmten Objektentfernung $a_i$; und
- Optimieren des Brillenglases derart, dass für die zumindest eine Bewertungsstelle $i_b$ eine Korrektion der transformierten astigmatischen Refraktion durch das Brillenglas in der bestimmten Gebrauchssituation berücksichtigt wird, wobei das Ermitteln der transformierten astigmatischen Refraktion ein Ermitteln eines transformierten Zylinderwerts $Z_i$ in der oben beschriebenen, erfindungsgemäßen Weise und/oder ein Ermitteln einer transformierten Zylinderachse $\alpha_i$ in der oben beschriebenen, erfindungsgemäßen Weise in Abhängigkeit von der bestimmten Objektentfernung $a_i$ umfasst.

Vorzugsweise ist die Vorrichtung ausgelegt, ein Verfahren gemäß der vorliegenden Erfindung oder einer bevorzugten Ausführungsform davon durchzuführen.

Bei einer vorgegebenen Gebrauchsstellung des Brillenglases für einen Brillenträger, d.h. bei vorgegebener Position des Brillenglases vor dem entsprechenden Auge des Brillenträgers und einem vorgegebenen Objektabstand, ergibt sich für viele Objektpunkte ein korrespondierendes Paar von Blickrichtungen des rechten und linken Auges, welche sich bei Blickbewegungen in Abhängigkeit von der Objektposition verändern. Damit hängt nicht nur jede einzelne Blickrichtung, sondern insbesondere auch die Relation der beiden Blickrichtungen zueinander von der Gebrauchssituation und dem Brillenglas ab. Durch die Berücksichtigung des Einflusses der Gebrauchssituation auf die Torsion des Auges über die vorgeschlagene Transformation, in der ein simulierter Konvergenzwinkel bereits ohne explizite Kenntnis und Durchrechnung des Strahlengangs für das andere Auge herangezogen wird, ist somit eine verbesserte Korrektion astigmatischer Refraktionen über einen weiten Nutzungsbereich eines Brillengases, insbesondere auch im Nahbereich erreichbar.

Die Gebrauchssituation legt dabei eine Positionierung des Brillenglases vor dem Auge des Brillenträgers und ein Objektabstandsmodell fest. Damit werden als Gebrauchssituation insbesondere Gebrauchsdaten bezüglich einer Positionierung des Brillenglases für einen Brillenträger und bezüglich einer Sehaufgabe des Brillenträgers erfasst oder bereitgestellt. Solche Gebrauchsdaten umfassen vorzugsweise Fassungsdaten, insbesondere bezüglich eines Kastenmaßes der Fassungsscheiben und/oder der Brückenweite und/oder eines Fassungsscheibenwinkels und/oder einer Vorneigung usw. der Brille. In einer bevorzugten Ausführungsform umfassen die Gebrauchsdaten bezüglich einer Sehaufgabe eine Vorgabe über hauptsächlich genutzte Blickwinkelbereiche und/oder hauptsächlich genutzte Objektentfernungen.

In jedem Fall legt die bestimmte Gebrauchssituation für eine Vielzahl von Blickrichtungen des Auges des Brillenträgers die Position eines zugehörigen Objektpunkts derart eindeutig fest, dass damit auch der Sehstrahl des Auges bei Betrachtung des Objektpunkts (in Abhängigkeit von der optischen Wirkung des Brillenglases) eindeutig festgelegt ist. Die Durchtrittpunkte der Sehstrahlen durch das Brillenglas werden als Durchblickpunkte bezeichnet. Dabei kann jeder Durchblickpunkt auf der Vorder- und/oder Rückfläche eines Brillenglases eine Bewertungsstelle für das Brillenglas repräsentieren. Aufgrund der eindeutigen Zuordnung der Sehstrahlen und Objektpunkte zu den Durchblickstellen durch das Brillenglas könnte die jeweilige Bewertungsstelle auch durch den entsprechenden Sehstrahl bzw. die Blickrichtung und/oder den Objektpunkt repräsentiert werden. In einer bevorzugten Ausführungsform werden die Bewertungsstellen eines Brillenglases durch zwei Koordinaten eines in Bezug auf das Brillenglas festgelegten Koordinatensystems dargestellt. Vorzugsweise wird dazu ein kartesisches x-y-z-Koordinatensystem festgelegt, dessen Ursprung beispielsweise im geometrischen Mittelpunkt (des ungerandeten bzw. rohrunden ersten oder zweiten Brillenglases) bzw. im Glasmittelpunkt des ersten bzw. zweiten Brillenglases insbesondere auf dessen Vorderfläche befindet, wobei sich die y-Achse in vertikaler Richtung in der Gebrauchsstellung bzw. Gebrauchssituation erstreckt und die z-Achse zum Auge hin weist. Damit lassen sich die Bewertungsstellen insbesondere durch die x-y-Koordinaten der Durchblickspunkte repräsentieren.

Je nach gewünschter Anwendung oder Zielsetzung kann das Brillenglas für eine vorgegebene oder vorgebbare Gebrauchssituation eines durchschnittlichen oder eines individuell bestimmten Brillenträgers hergestellt bzw. optimiert werden.

Eine durchschnittliche Gebrauchssituation (wie in DIN 58 208 Teil 2 definiert) kann durch:

- Parameter eines Standardauges, wie z.B. dem sogenannten Gullstrand-Auge eines Brillenträgers (Augendrehpunkt, Eintrittspupille, und/oder Hauptebene, etc.);
- Parameter einer Standardgebrauchsstellung bzw. Anordnung des Brillenglaspaares vor den Augen des Brillenträgers (Fassungsscheibenwinkel, Vorneigung, Hornhautscheitelabstand, etc.); und/oder
- Parameter eines Standardobjektmodells bzw. Standardobjektentfernung charakterisiert werden.

Die Gebrauchsposition kann beispielsweise anhand einer standardisierten Gebrauchsposition festgelegt werden. Bei Verwendung der Brillenfassung bzw. der Brille gemäß einer standardisierten Gebrauchsstellung beträgt der Augendrehpunktabstand etwa 27,4 mm oder etwa 27,9 mm oder etwa 28,5 mm oder etwa 28,8 mm, die Vorneigung, d.h. der pantoskopische Winkel beträgt etwa 8°, der Fassungsscheibenwinkel beträgt etwa 0°, die Pupillendistanz beträgt etwa 63 mm, der Hornhautscheitelabstand beträgt etwa 15 mm, die Objektentfernung im Fernbezugspunkt beträgt etwa 0 dpt und die Objektentfernung im Nahbezugspunkt beträgt etwa -2,5 dpt.

Insbesondere beträgt bei einer Verwendung der Brillenfassung bzw. der Brille gemäß einer standardisierten Gebrauchsstellung der Augendrehpunktabstand etwa 26,5 mm, die Vorneigung, d.h. der pantoskopische Winkel etwa 9°, der Fassungsscheibenwinkel etwa 5°, die Pupillendistanz etwa 64 mm und der Hornhautscheitelabstand beträgt etwa 13 mm.

Alternativ beträgt bei einer Verwendung der Brillenfassung bzw. der Brille gemäß einer standardisierten Gebrauchsstellung der Augendrehpunktabstand etwa 28,5 mm, die Vorneigung, d.h. der pantoskopische Winkel etwa 7°, der Fassungsscheibenwinkel etwa 0°, die Pupillendistanz etwa 63 mm und der Hornhautscheitelabstand beträgt etwa 15 mm.

Alternativ beträgt bei einer Verwendung der Brillenfassung bzw. der Brille gemäß einer standardisierten Gebrauchsstellung der Augendrehpunktabstand etwa 25 mm, die Vorneigung, d.h. der pantoskopische Winkel etwa 8°, der Fassungsscheibenwinkel etwa 5°, die Pupillendistanz etwa 64 mm und der Hornhautscheitelabstand beträgt etwa 13 mm.

Alternativ beträgt bei einer Verwendung der Brillenfassung bzw. der Brille gemäß einer standardisierten Gebrauchsstellung der Augendrehpunktabstand etwa 27,5 mm, die Vorneigung, d.h. der pantoskopische Winkel etwa 11°, der Fassungsscheibenwinkel etwa 0°, die Pupillendistanz etwa 65 mm und der Hornhautscheitelabstand beträgt etwa 14 mm.

Die folgenden numerischen Parameter charakterisieren beispielsweise eine durchschnittliche Gebrauchssituation:

Hornhautscheitelabstand (HSA) = 15,00 mm;
Vorneigung = 8,0 Grad;
Fassungsscheibenwinkel = 0,0 Grad;
Pupillendistanz = 63,0 mm;
Augendrehpunktabstand e = 28,5mm;
Objektabstandmodell: unendlicher Objektabstand im oberen Abschnitt des Brillenglases, welcher fließend in einen Objektabstand von -2,6 dpt bei x = 0 mm, y = -20 mm übergeht.

Alternativ können aber auch individuelle Parameter des Auges bzw. der Augen eines bestimmten Brillenträgers (Augendrehpunkt, Eintrittspupille, und/oder Hauptebene, etc.), der individuellen Gebrauchsstellung bzw. Anordnung vor den Augen des Brillenträgers (Fassungsscheibenwinkel, Vorneigung, Hornhautscheitelabstand, etc.) und/oder des individuellen Objektentfernungsmodells berücksichtigt werden.

Die Erfindung wird nachfolgend anhand von bevorzugten Ausführungsformen unter Bezugnahme auf die beigefügten Zeichnungen beschrieben. Dabei zeigen:

Fig. 1      eine Darstellung von Helmholtz-Koordinaten gemäß einer bevorzugten Ausführungsform der Erfindung;

Fig. 2A und 2B      schematische Darstellungen eines Augenpaars mit paralleler (Fig. 2A) bzw. konvergenter (Fig. 2B) erster und zweiter Blickrichtung;

Fig.3      eine schematische Darstellung eines Augenpaars zur Veranschaulichung der Konvergenzbestimmung unter Berücksichtigung der Prentice'schen Regel;

Fig. 4A bis 4C      Isoastigmatismuslinien der Fehlrefraktion eines herkömmlichen Brillenglases bei einer Bewertung ohne Transformation (Fig. 4A), eine Bewertung unter expliziter Berücksichtigung der Blickrichtung des anderen Auges, wie in WO 2010/054817 A1 beschrieben, (Fig. 4B) bzw. einer Bewertung mit einer erfindungsgemäßen Transformation der Zylinderachse (Fig. 4C);

Fig. 5A bis 7B      Verlauf der Fehlrefraktion in Bezug auf die Brechkraft (linke Kurve) und den Astigmatismus (rechte Kurve) entlang der Hauptlinie für verschiedene herkömmliche Einstärkengläser bei verschiedenen Auswertungen (Fig. 5A bis Fig. 5C, Fig. 6A bis Fig. 6C und Fig. 7A) bzw. erfindungsgemäß optimierte Gläser bei Transformation des Zylinderwerts (Fig. 5D, Fig. 6D und Fig. 7B); und

Fig. 8      eine schematische Darstellung eines Beispiels einer bevorzugten Vorrichtung zum Optimieren bzw. Herstellen eines Brillenglases bzw. Brillenglaspaares gemäß der vorliegenden Erfindung.

**Fig. 1** zeigt eine graphische Definition von Helmholtz-Koordinaten zur Optimierung eines Brillenglases bzw. Brillenglaspaares gemäß einer bevorzugten Ausführungsform der Erfindung. Dabei könnten für jedes der beiden Augen eigene Helmholtz-Koordinaten eingeführt werden. In Fig. 1 ist dies nur für ein Auge beispielhaft dargestellt. Das augenfeste Dreibein ($\mathbf{e}_{x,H}, \mathbf{e}_{y,H}, \mathbf{e}_{z,H}$) des Auges geht dabei aus dem raumfesten Dreibein ($\mathbf{e}_x, \mathbf{e}_y, \mathbf{e}_z$) durch folgende Schritte hervor:

1. Rotation um die x-Achse um den Winkel $\vartheta$ (erster Helmholtz-Winkel)
2. Rotation um die neue y-Achse um den Winkel $-\varphi$ (zweiter Helmholtz-Winkel)
3. Rotation um die neue z-Achse um den Winkel $\psi$ der Torsion

Vorzugsweise beschreibt die z-Achse $\mathbf{e}_z$ die Richtung des augenseitigen Hauptstrahls in der Referenzblickrichtung, während die gedrehte z-Achse die Richtung des augenseitigen Hauptstrahls in der ersten bzw. zweiten Blickrichtung repräsentiert.

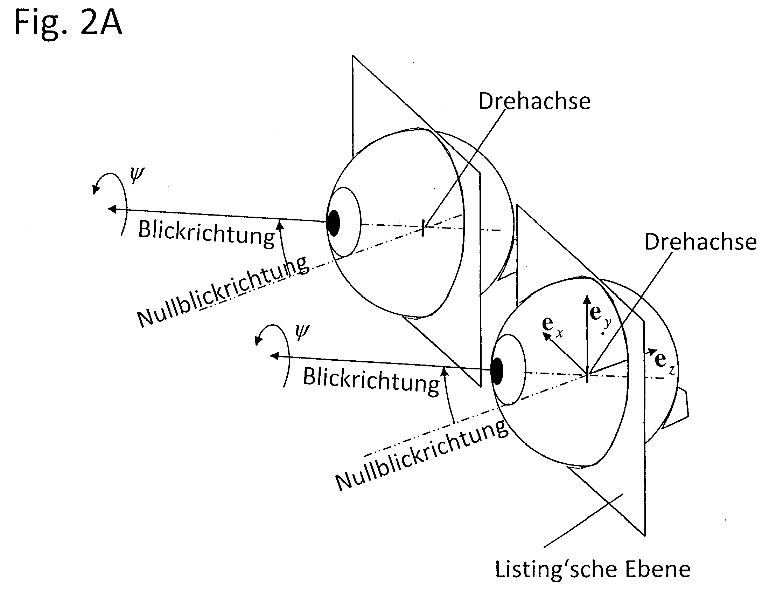

**Fig. 2A** veranschaulicht die Listing'sche Regel beim Blick in die Ferne. Beide Augen besitzen dieselben Blickwinkel $\vartheta$ und $\varphi$, und infolgedessen auch denselben Torsionswinkel $\psi_{Helmholtz}(\varphi, \vartheta)$ in der Helmholtz-Darstellung nach Gl. (6). Die Helmholtz-Koordinaten beziehen sich auf das raumfeste Dreibein ($\mathbf{e}_x, \mathbf{e}_y, \mathbf{e}_z$), das auch in Fig. 2A eingezeichnet ist.

Insbesondere für manche Blickrichtungen könnte es dazu kommen, dass die Torsionswinkel $\psi^{(l)}$ und $\psi^{(r)}$ in der Helmholzdarstellung für die beiden Augen verschieden sind, so dass die Einzelbilder nicht mehr auf korrespondierenden Netzhautstellen, sondern auf disparaten Netzhautstellen entstehen, die verdreht zueinander sind. Dadurch kommt es zu einem binokularen Doppelbild und Fusionsstörungen. Dieses Problem tritt insbesondere dann auf, wenn die augenseitigen Hauptstrahlen für das linke bzw. das rechte Auge verscheiden sind. Dies ist entweder bei einer Konvergenzbewegung der Fall oder kann auch durch Prismen im Glas hervorgerufen werden, die für beide Augen im benutzten Strahlengang verschieden sind.

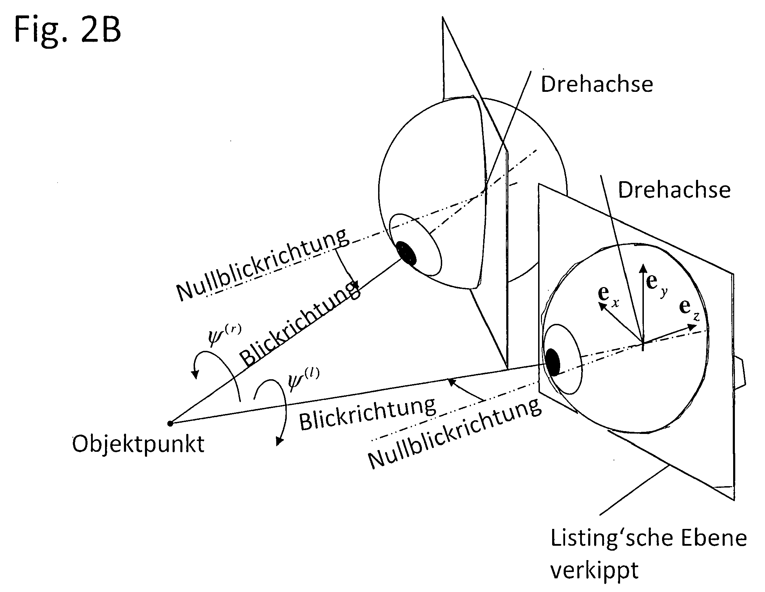

Die Torsionsbewegung der Augen weicht in einem solchen Fall von den Vorgaben der Listing'schen Regel L1 ab, wie z.B. in Fig. 2B dargestellt. Fig. 2B veranschaulicht eine Abwandlung der Listing'schen Regel gemäß einer bevorzugten Ausführungsform der Erfindung. Die Augen konvergieren, und daher besitzt das linke Auge ein anderes Blickwinkelpaar $(\varphi^{(l)}, \vartheta^{(l)})$ als das rechte Auge, das durch $(\varphi^{(r)}, \vartheta^{(r)})$ beschrieben wird. Entsprechend sind auch die Torsionswinkel $\psi_{Helmholtz}(\varphi, \vartheta)$ nach Gl. (6) verschieden, $\psi^{(l)} \neq \psi^{(r)}$. Die Helmholtz-Koordinaten beziehen sich auf das raumfeste Dreibein ($\mathbf{e}_x, \mathbf{e}_y, \mathbf{e}_z$), das auch in Fig.2B eingezeichnet ist.

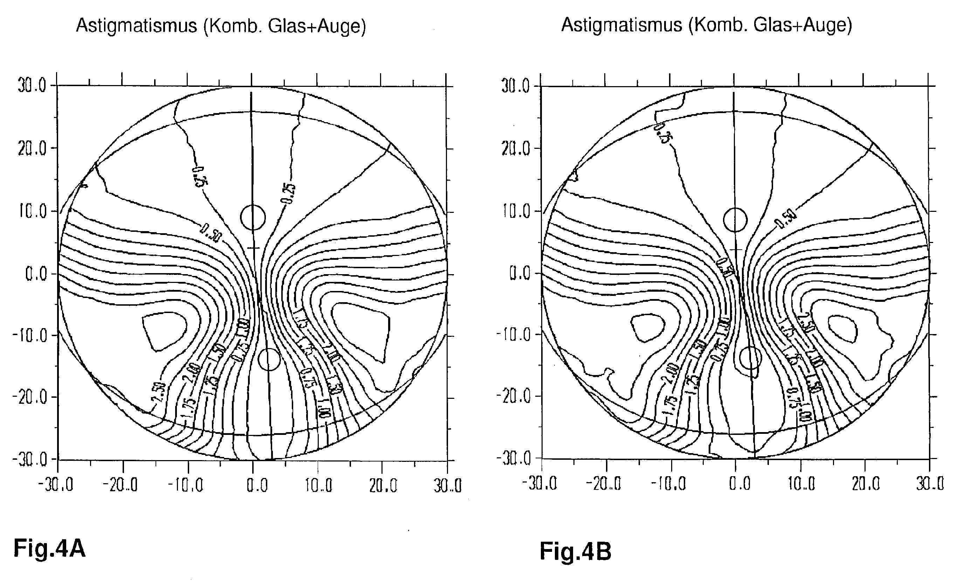

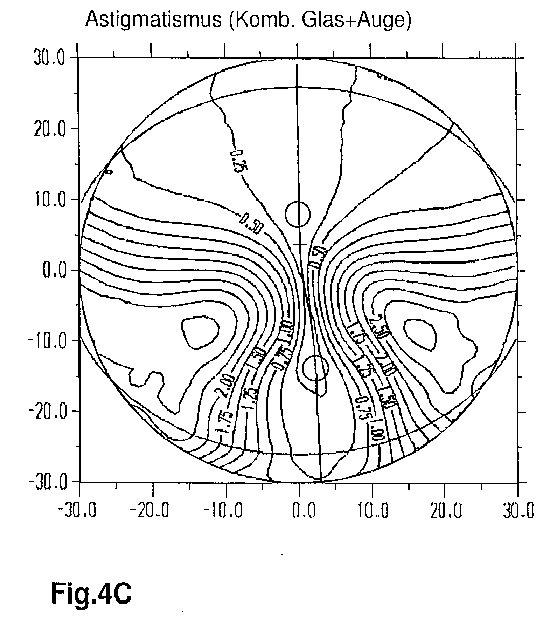

In **Fig. 4** bis **Fig. 7** werden nun verschiedene Brillengläser verglichen, welche jeweils auf unterschiedliche Weise optimiert wurden, wobei das Resultat des Optimierungsschritts anschießend durch unterschiedliche Weise ausgewertet wurde.

Dabei veranschaulichen Fig. 4A bis 4C insbesondere die Effizienz der Transformation der Zylinderachse gemäß einem Aspekt der Erfindung. Darin sind Isoastigmatismuslinien der Fehlrefraktion eines ohne eine Transformation der astigmatischen Refraktion optimierten Brillenglases bei einer Bewertung ohne Transformation (Fig. 4A), einem herkömmlichen Verfahren Berücksichtigung der Blickrichtung des anderen Auges, wie in WO 2010/054817 A1 beschrieben, (Fig. 4B) und einer Bewertung mit einer erfindungsgemäßen Transformation der Zylinderachse (Fig. 4C) dargestellt. Während ein Unterschied zwischen den herkömmlichen Verfahren ohne Transformation und den anderen beiden Verfahren zu erkennen ist, leistet die erfindungsgemäße Transformation in optischer Hinsicht überraschenderweise einen vergleichbar guten Effekt wie die Berechnung gemäß WO 2010/054817 A1, allerdings mit deutlich geringerem Rechenaufwand.

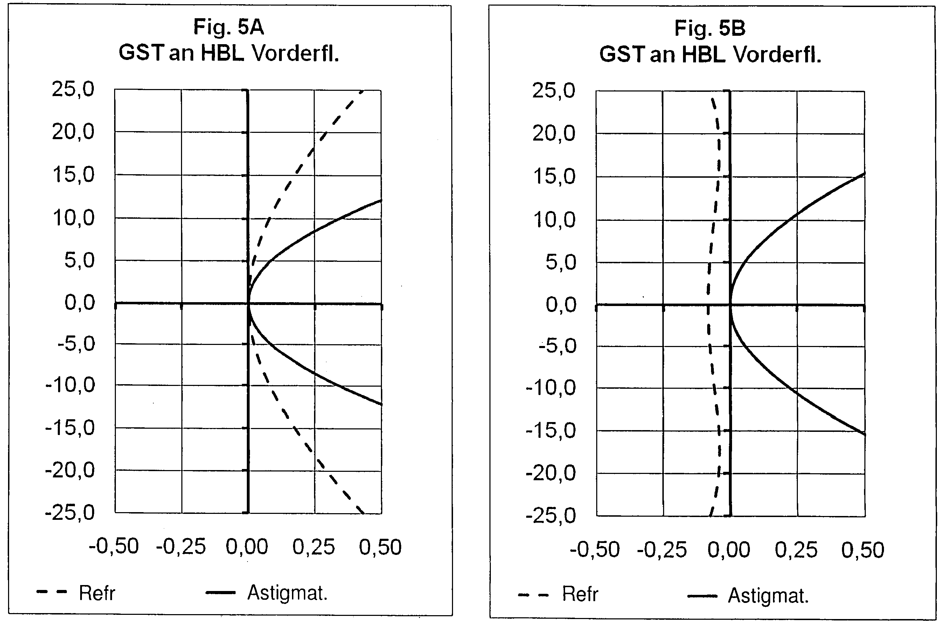

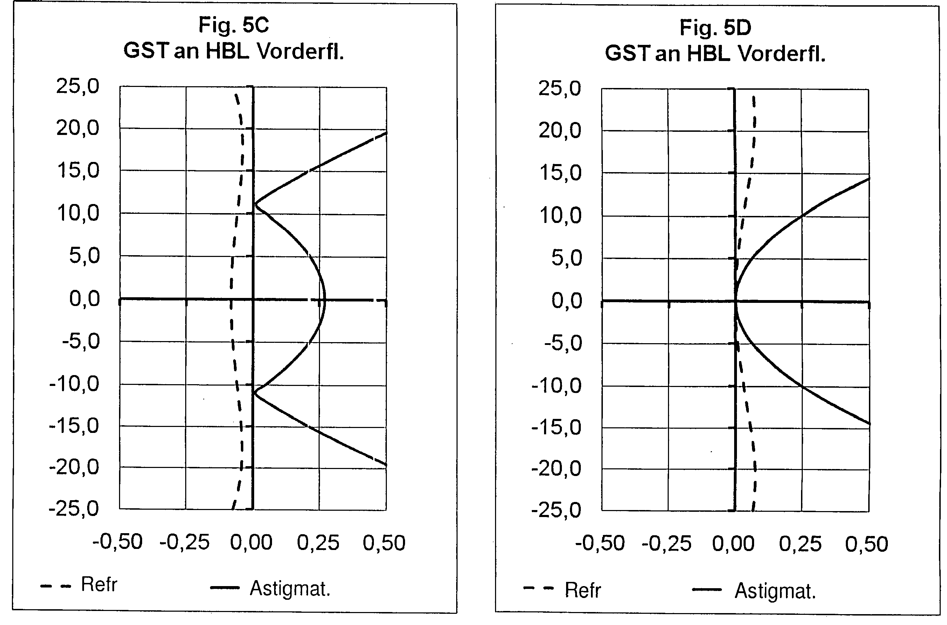

In Fig. 5 bis Fig. 7 ist die Effizienz der Transformation des Zylinderwerts gemäß bevorzugter Ausführungsformen der Erfindung zur zumindest teilweisen Kompensation des Einstellastigmatismus veranschaulicht.

Dabei zeigt Fig. 5A bis 5C den Verlauf der Fehlrefraktion in Bezug auf die Brechkraft (linke Kurve) und den Astigmatismus (rechte Kurve) entlang der Hauptlinie für ein herkömmliches Einstärkenglas bei verschiedenen Auswertungen. Insbesondere handelt es sich um ein herkömmlich für eine durch die Verordnungsdaten festgelegte sphärische Wirkung von +2 dpt und eine zylindrische Wirkung von +3 dpt optimiertes Einstärkenglas. Dabei ist in Fig. 5A die Fehlrefraktion bei einer herkömmlichen Bewertung für einen unendlichen Objektabstand dargestellt. Eine entsprechende Bewertung für einen endlichen Objektabstand von 40 cm ist in Fig. 5B dargestellt. Ohne Berücksichtigung des Einstellastigmatismus bleibt an der optischen Achse der astigmatische Fehler korrigiert. Nur der geringere Akkommodationserfolg mit Korrektionsglas zeigt sich als kleiner negativer Refraktionsfehler. Fig. 5C zeigt eine Bewertung desselben Glases bei einem Objektabstand von 40 cm aber unter Berücksichtigung des Einstellastigmatismus. Mit Berücksichtigung des Einstellastigmatismus wird jetzt auch der an der optischen Achse wirksame astigmatische Fehler sichtbar. Ein astigmatisches SV-Glas kann nicht gleichzeitig für die Ferne und für die Nähe vollkorrigierend sein. Fig. 5D schließlich zeigt ein gemäß einer bevorzugten Ausführungsform der Erfindung unter Transformation des Zylinderwerts optimiertes Einstärkenglas für dieselbe Verordnung bei einer Bewertung für einen Objektabstand von wiederum 40 cm.

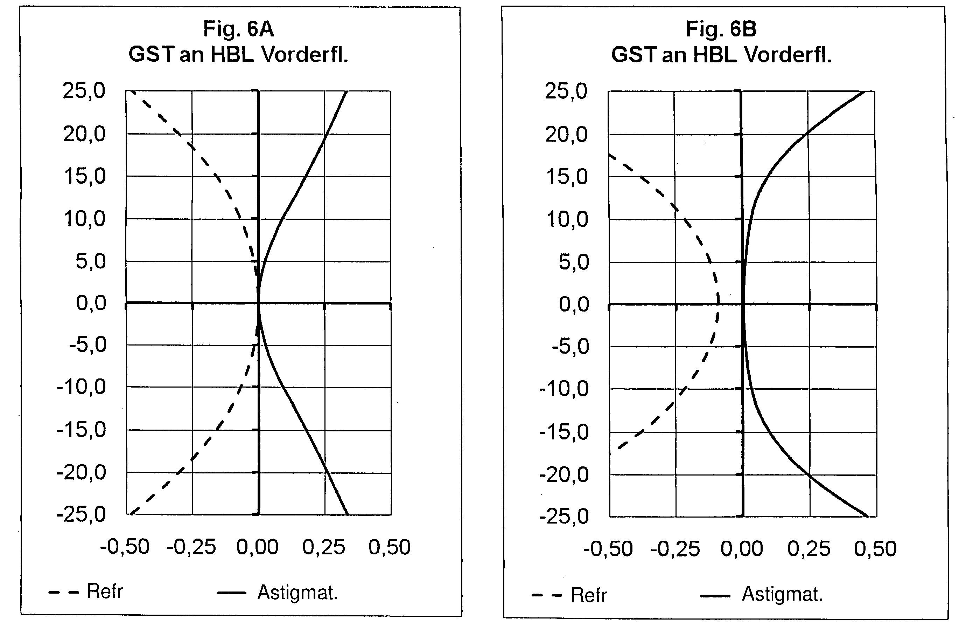

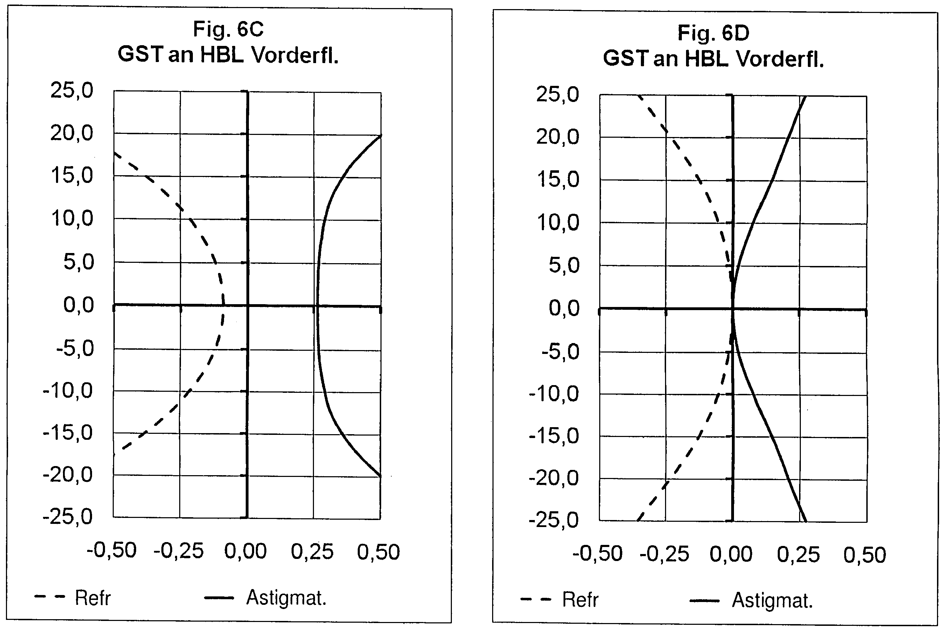

Analoge Darstellungen sind in Fig. 6A bis 6D für ein Glas gezeigt, das für dieselben Verordnungswerte gemäß der Serie "Impression Mono" von Rodenstock optimiert wurde. Wiederum ist in Fig. 6A die Fehlrefraktion bei einer herkömmlichen Bewertung für einen unendlichen Objektabstand dargestellt. Eine entsprechende Bewertung für einen endlichen Objektabstand von 40 cm ist in Fig. 6B dargestellt. Ohne Berücksichtigung des Einstellastigmatismus bleibt an der optischen Achse der astigmatische Fehler korrigiert. Die Abbildungsgüte ist auch für nahe Objekte gut. Fig. 6C zeigt eine Bewertung desselben Glases bei einem Objektabstand von 40 cm aber unter Berücksichtigung des Einstellastigmatismus. Wiederum wird mit Berücksichtigung des Einstellastigmatismus auch der an der optischen Achse wirksame astigmatische Fehler sichtbar. Ein astigmatisches SV-Glas kann nicht gleichzeitig für die Ferne und für die Nähe vollkorrigierend sein. Fig. 6D schließlich zeigt ein gemäß einer bevorzugten Ausführungsform der Erfindung unter Transformation des Zylinderwerts optimiertes Einstärkenglas für dieselbe Verordnung bei einer Bewertung für einen Objektabstand von wiederum 40 cm.

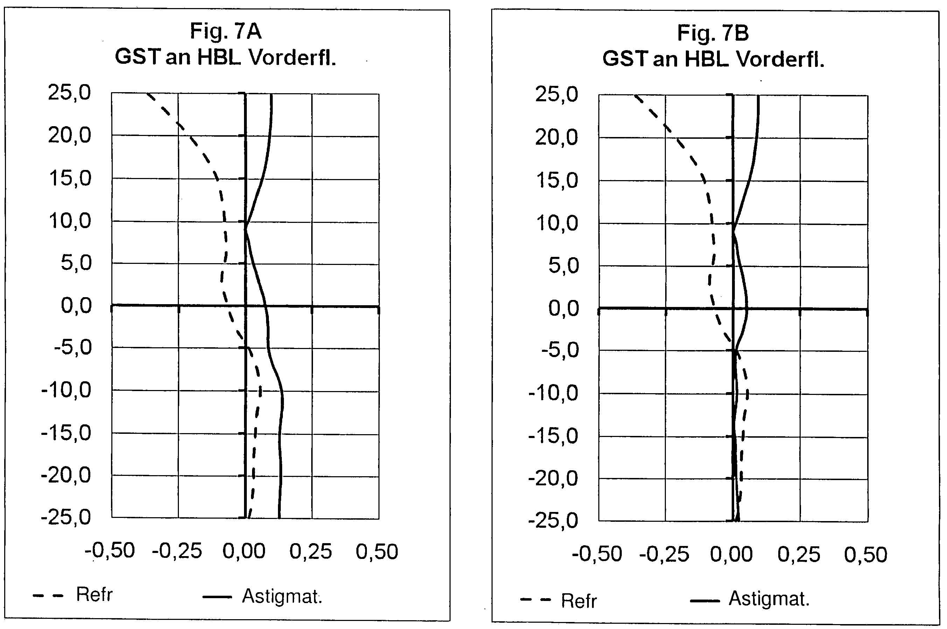

Fig. 7A und Fig. 7B stellen ein herkömmlich optimiertes und ein erfindungsgemäß optimiertes Gleitsichtglas der Serie "FreeSign" von Rodenstock gegenüber. Die zugrunde liegenden Verordnungsdaten legen eine sphärische Wirkung von -1 dpt eine zylindrische Wirkung von 3 dpt und eine Addition von 1 dpt fest. Fig. 7A zeigt den Verlauf der Fehlrefraktion in Bezug auf die Brechkraft (linke Kurve) und den Astigmatismus (rechte Kurve) entlang der Hauptlinie für ein herkömmliches Gleitsichtglas bei einer Bewertung unter Berücksichtigung des Einstellastigmatismus. Im Fernbereich wirkt sich der Einstellastigmatismus wegen der fehlenden Akkommodation nicht aus. Im Nahbereich zeigt sich ein astigmatischer Fehler von ca. 1/8 dpt. Demgegenüber veranschaulicht Fig. 7B ein gemäß einer bevorzugten Ausführungsform der Erfindung unter Transformation des Zylinderwerts optimiertes Gleitsichtglas.

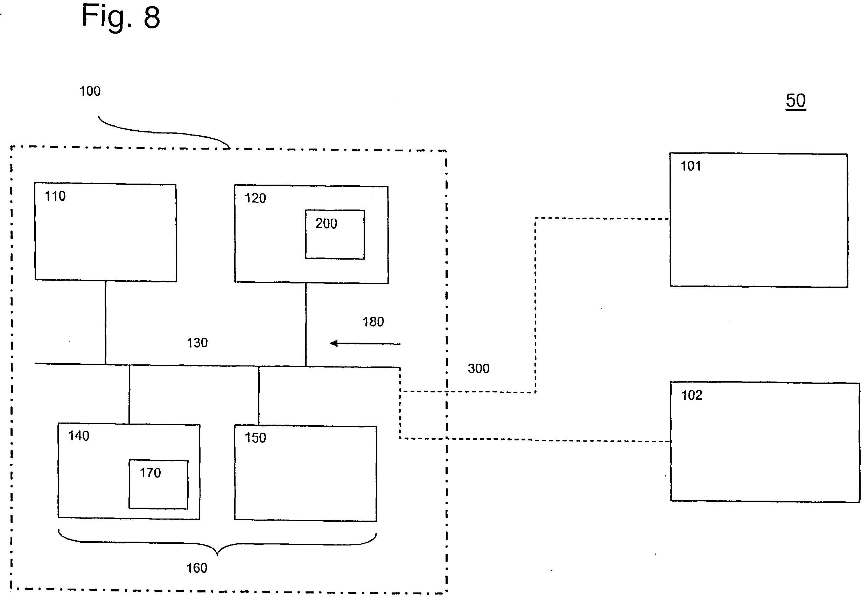

Wie schematisch in **Fig.8** dargestellt ist, wird ferner ein Computerprogrammerzeugnis (d.h. ein in der Patentanspruchskategorie einer Vorrichtung beanspruchtes Computerprogramm) 200 bereitgestellt, welches derart ausgelegt ist, dass es - wenn geladen und ausgeführt auf einem geeigneten Computer 100 bzw. Netzwerk - ein Verfahren zur Optimierung bzw. Herstellung eines Brillenglaspaares zur Benutzung in einer Brille für eine bestimmte Gebrauchssituation durchführen kann. Das Computerprogrammerzeugnis 200 kann auf einem körperlichen Speichermedium bzw. Programmträger 120 gespeichert werden bzw. sein. Das Computerprogrammerzeugnis kann ferner als Programmsignal vorliegen.

Unter Bezugnahme auf Fig. 8 wird nachfolgend eine mögliche Computer- bzw. Netzwerkarchitektur beschrieben. Der Prozessor 110 des Computers 100 ist beispielsweise ein Zentralprozessor (CPU), ein Mikrocontroller (MCU), oder ein digitaler Signalprozessor (DSP). Der Speicher 120 symbolisiert Elemente, die Daten und Befehle entweder zeitlich begrenzt oder dauerhaft speichern. Obwohl zum besseren Verständnis der Speicher 120 als Teil des Computers 100 gezeigt ist, kann die Speicherfunktion an anderen Stellen, z.B. im Prozessor selbst (z.B. Cache, Register) und/oder auch im Netzwerk 300, beispielsweise in den Computern 101/102 implementiert werden. Der Speicher 120 kann ein Read-Only-Memory (ROM), ein Random-Access-Memory (RAM), ein programmierbares oder nicht-programmierbares PROM oder ein Speicher mit anderen Zugriffsoptionen sein.

Der Speicher 120 kann physisch auf einem computerlesbaren Programmträger, zum Beispiel auf:

(a) einem magnetischen Träger (Festplatte, Diskette, Magnetband);
(b) einem optischen Träger (CD-ROM, DVD);
(c) einem Halbleiterträger (DRAM, SRAM, EPROM, EEPROM); implementiert bzw. gespeichert werden.

Wahlweise ist der Speicher 120 über verschiedene Medien verteilt. Teile des Speichers 120 können fest oder austauschbar angebracht sein. Zum Lesen und Schreiben benutzt der Computer 100 bekannte Mittel wie z.B. Diskettenlaufwerke, usw.

Der Speicher 120 speichert Unterstützungskomponenten wie zum Beispiel ein Bios (Basic Input Output System), ein Betriebssystem (OS), eine Programmbibliothek, einen Compiler, einen Interpreter und/oder ein Tabellen- bzw. Textverarbeitungsprogramm. Diese Komponenten sind zum besseren Verständnis nicht dargestellt. Unterstützungskomponenten sind kommerziell verfügbar und können auf dem Computer 100 von Fachleuten installiert bzw. in diesem implementiert werden.

Der Prozessor 110, der Speicher 120, die Eingabe- und die Ausgabevorrichtung sind über zumindest einen Bus 130 verbunden und/oder wahlweise über das (mono-, bi- bzw. multidirektionale) Netzwerk 300 (z.B. das Internet) angeschlossen bzw. stehen miteinander in Verbindung. Der Bus 130 sowie das Netzwerk 300 stellen logische und/oder physische Verbindungen dar, die sowohl Befehle als auch Datensignale übertragen. Die Signale innerhalb des Computers 100 sind überwiegend elektrische Signale, wohingegen die Signale im Netzwerk elektrische, magnetische und/oder optische Signale oder auch drahtlose Funksignale sein können.

Netzwerkumgebungen (wie das Netzwerk 300) sind in Büros, unternehmensweiten Computernetzwerken, Intranets und im Internet (d.h. World Wide Web) üblich. Die physische Entfernung zwischen den Computern im Netzwerk ist ohne Bedeutung.

Das Netzwerk 300 kann ein drahtloses oder ein verdrahtetes Netzwerk sein. Als mögliche Beispiele für Implementierungen des Netzwerks 300 seien hier angeführt: ein lokales Netzwerk (LAN), ein kabelloses lokales Netzwerk (WLAN), ein Wide Area Network (WAN), ein ISDN-Netz, eine Infrarotverbindung (IR), eine Funkverbindung wie beispielsweise das Universal Mobile Telecommunication System (UMTS) oder eine Satellitenverbindung. Übertragungsprotokolle und Datenformate sind bekannt. Beispiele dafür sind: TCP/IP (Transmission Control Protocol/Internet Protocol), HTTP (Hypertext Transfer Protocol), URL (Unique Resource Locator), HTML (Hypertext Markup Language), XML (Extensible Markup Language), WML (Wireless Application Markup Language), Wireless Application Protocol (WAP) usw.

Die Eingabe- und Ausgabevorrichtungen können Teil einer Benutzerschnittstelle 160 sein.. Die Eingabevorrichtung 140 steht für eine Vorrichtung, die Daten und Anweisungen zur Verarbeitung durch den Computer 100 bereitstellt. Beispielsweise ist die Eingabevorrichtung 140 eine Tastatur, eine Zeigevorrichtung (Maus, Trackball, Cursorpfeile), Mikrofon, Joystick, Scanner. Obwohl es sich bei den Beispielen allesamt um Vorrichtungen mit menschlicher Interaktion, vorzugsweise durch eine graphische Benutzerschnittstelle, handelt, kann die Vorrichtung 140 auch ohne menschliche Interaktion auskommen, wie zum Beispiel ein drahtloser Empfänger (z.B. mittels Satelliten- oder terrestrischer Antenne), ein Sensor (z.B. ein Thermometer), ein Zähler (z.B. ein Stückzahlzähler in einer Fabrik). Die Eingabevorrichtung 140 kann zum Lesen des Speichermediums bzw. Trägers 170 verwendet werden.

Die Ausgabevorrichtung 150 bezeichnet eine Vorrichtung, die Anweisungen und Daten anzeigt, die bereits verarbeitet wurden. Beispiele dafür sind ein Monitor oder eine anderer Anzeige (Kathodenstrahlröhre, Flachbildschirm, Flüssigkristallanzeige, Lautsprecher, Drucker, Vibrationsalarm). Ähnlich wie bei der Eingabevorrichtung 140 kommuniziert die Ausgabevorrichtung 150 bevorzugt mit dem Benutzer, vorzugsweise durch eine graphische Benutzerschnittstelle. Die Ausgabevorrichtung kann ebenfalls mit anderen Computern 101, 102, usw. kommunizieren.

Die Eingabevorrichtung 140 und die Ausgabevorrichtung 150 können in einer einzigen Vorrichtung kombiniert werden. Beide Vorrichtungen 140, 150 können wahlweise bereitgestellt werden.

Das Computerprogrammerzeugnis bzw. -produkt 200 umfasst Programminstruktionen und wahlweise Daten, die den Prozessor 110 unter anderem dazu veranlassen, die Verfahrensschritte des Verfahrens gemäß der Erfindung oder bevorzugte Ausführungsformen hiervon auszuführen. Mit anderen Worten definiert das Computerprogramm 200 die Funktion des Computers 100 und dessen Interaktion mit dem Netzwerksystem 300. Das Computerprogrammerzeugnis 200 kann beispielsweise als Quellcode in einer beliebigen Programmiersprache und/oder als Binärcode in kompilierter Form (d.h. maschinenlesbarer Form) vorliegen. Ein Fachmann ist in der Lage, das Computerprogrammerzeugnis 200 in Verbindung mit jeder der zuvor erläuterten Unterstützungskomponente (z.B. Compiler, Interpreter, Betriebssystem) zu benutzen.

Obwohl das Computerprogrammerzeugnis 200 als im Speicher 120 gespeichert dargestellt ist, kann das Computerprogrammerzeugnis 100 aber auch an beliebig anderer Stelle (z.B. auf dem Speichermedium bzw. Programmträger 170) gespeichert sein.

Das Speichermedium 170 ist beispielhaft als außerhalb des Computers 100 angeordnet dargestellt. Um das Computerprogrammerzeugnis 200 auf den Computer 100 zu übertragen, kann das Speichermedium 170 in das Eingabegerät 140 eingeführt werden. Das Speichermedium 170 kann als ein beliebiger, computerlesbarer Träger implementiert werden, wie zum Beispiel als eines der zuvor erläuterten Medien (vgl. Speicher 120). Das Programmsignal 180, welches vorzugsweise über das Netzwerk 300 zum Computer 100 übertragen wird, kann ebenfalls das Computerprogrammerzeugnis 200 beinhalten bzw. ein Teil hiervon sein.

Schnittstellen zum Koppeln der einzelnen Komponenten des Computersystems 50 sind ebenfalls bekannt. Zur Vereinfachung sind die Schnittstellen nicht dargestellt.

Eine Schnittstelle kann beispielsweise eine serielle Schnittstelle, eine parallele Schnittstelle, ein Gameport, ein universeller serieller Bus (USB), ein internes oder externes Modem, ein Grafikadapter und/oder eine Soundkarte aufweisen.

Es ist insbesondere möglich, Rezeptdaten der Brillengläser vorzugsweise zusammen mit individuellen Daten des Brillenträgers (einschließlich der Daten der individuellen Gebrauchssituation) und/oder Daten des Brillenglases (Brechungsindex, Pfeilhöhen der Vorder- und Rückfläche) vorzugsweise per Datenfernübertragung an eine erfindungsgemäße Vorrichtung zur Herstellung eines Brillenglases zu übermitteln. Die Optimierung des Brillenglases erfolgt dann vorzugsweise aufgrund der übermittelten Rezeptdaten und individuellen Daten.

## Bezugszeichenliste

| | |
|---|---|
| 50 | Computersystem |
| 100, 101, 102 | Computer |
| 110 | Prozessor |
| 120 | Speicher |
| 130 | Bus |
| 140 | Eingabevorrichtung |
| 150 | Ausgabevorrichtung |
| 160 | Benutzerschnittstelle |
| 170 | Speichermedium |
| 180 | Programmsignal |
| 200 | Computerprogrammerzeugnis |
| 300 | Netzwerk |

## Patentansprüche

1. Verfahren zur Optimierung und Herstellung eines Brillenglases für eine bestimmte Gebrauchssituation zur Korrektion zumindest einer astigmatischen Refraktion eines Auges eines Brillenträgers, welche in einer Referenzblickrichtung $-\mathbf{e}_z$ des Auges einen Zylinderreferenzwert $Z_0$ und eine Zylinderreferenzachse $\alpha_0$ aufweist, umfassend einen Berechnungs- bzw. Optimierungsschritt des Brillenglases, welcher umfasst:

   - Bestimmen einer Objektentfernung $a_i$ für zumindest eine Bewertungsstelle $i_b$ des Brillenglases;
   - Ermitteln einer transformierten astigmatischen Refraktion für die zumindest eine *Bewertungsstelle* $i_b$ des Brillenglases aus dem Zylinderreferenzwert $Z_0$ und der Zylinderreferenzachse $\alpha_0$ in Abhängigkeit von der be-

stimmten Objektentfernung $a_i$; und

- Optimieren des Brillenglases derart, dass für die zumindest eine Bewertungsstelle $i_b$ eine Korrektion der transformierten astigmatischen Refraktion durch das Brillenglas in der bestimmten Gebrauchssituation berücksichtigt wird,

wobei das Ermitteln der transformierten astigmatischen Refraktion ein Ermitteln eines transformierten Zylinderwerts $Z_i$ und/oder einer transformierten Zylinderachse $\alpha_i$ in Abhängigkeit von der bestimmten Objektentfernung $a_i$ umfasst; wobei der transformierte Zylinderwert $Z_i$ gemäß

$$Z_i = Z_0 + e\left(Add + \frac{1}{a_i}\right)\left(-2 + e\left(Add + \frac{1}{a_i} - 2S_0 - Z_0\right)\right)Z_0$$

von einem Abstand $e$ zwischen dem Brillenglas und der Hauptebene des Auges und von einer für die Referenzblickrichtung $-\mathbf{e}_z$ ermittelten Sphäre $S_0$ der zu korrigierenden Refraktion des Auges abhängt, wobei $Add$ einen Brechwertzuwachs von der Referenzblickrichtung $-\mathbf{e}_z$ zu einer der zumindest einen Bewertungsstelle $i_b$ entsprechenden Blickrichtung $-\mathbf{e}_\zeta$ des Auges bezeichnet, und

wobei die transformierte Zylinderachse $\alpha_i$ mit einer sowohl zur Referenzblickrichtung $-e_z$ als auch zu einer der zumindest einen Bewertungsstelle $i_b$ entsprechenden Blickrichtung $-\mathbf{e}_\zeta$ des Auges senkrechten Torsionsreferenzachse $\mathbf{e}_L$ einen Korrektionstorsionswinkel $\psi_k$ einschließt, der von einem Referenztorsionswinkel $\psi_0$ zwischen der Zylinderreferenzachse $\alpha_0$ und der Torsionsreferenzachse $\mathbf{e}_L$ um einen Torsionskorrekturwinkel

$$\psi_\Delta = \frac{(\sin\vartheta)\Delta\varphi}{1 + \cos\vartheta\cos\left(\varphi + \frac{\Delta\varphi}{2}\right)}$$

abweicht, welcher vom ersten Helmholtz-Winkel $\vartheta$ und vom zweiten Helmholtz-Winkel $\varphi$ der der zumindest einen Bewertungsstelle $i_b$ entsprechenden Blickrichtung $-\mathbf{e}_\zeta$ des Auges sowie von einem Konvergenzwinkel $\Delta\varphi$ gemäß

$$\Delta\varphi = -\frac{PD - a_i\left(\Delta d_y S_{xy} + \Delta\mathrm{Pr}_0\right)}{a_i - b'\left(1 + a_i S_{xx}\right)}$$

in Abhängigkeit von einer Pupillendistanz $PD$ des Brillenträgers, eines Drehpunkt-Scheitelabstands $b'$ und Komponenten $S_{xx}$ und $S_{xy}$ einer Brechwertmatrix $\mathbf{S} = \begin{pmatrix} S_{xx} & S_{xy} \\ S_{xy} & S_{yy} \end{pmatrix}$ des Brillenglases abhängt, wobei der Wert $\Delta P_{r0}$ eine prismatische Wirkung und der Wert $\Delta d_y$ eine Differenz der vertikalen Blicksenkung zwischen linkem und rechtem Auge bezeichnet.

2. Verfahren nach Anspruch 1, wobei die Referenzblickrichtung $-\mathbf{e}_z$ des Auges der Nullblickrichtung des Brillenträgers und die zumindest eine Bewertungsstelle $i_b$ des Brillenglases einem Nahbezugspunkt des Brillenglases entspricht.

3. Verfahren nach einem der vorangegangenen Ansprüche, wobei das Verfahren im Fall des Ermittelns eines transformierten Zylinderwerts $Z_i$ außerdem ein Ermitteln einer transformieren Sphäre $S_i$ umfasst, welche gemäß

$$S_i = S_0 + \frac{(Z_0 - Z_i)}{2} + Add + e^2\left(Add + \frac{1}{a_i}\right)Z_0^2$$

vom transformierten Zylinderwert $Z_i$ abhängt und wobei das Optimieren des Brillenglases derart erfolgt, dass für die zumindest eine Bewertungsstelle $i_b$ eine Korrektion der transformierten Sphäre $S_i$ durch das Brillenglas in der bestimmten Gebrauchssituation berücksichtigt wird.

4. Verfahren nach einem der vorangegangenen Ansprüche, wobei im Fall des Ermittelns einer transformierten Zylinderachse $\alpha_i$ diese derart ermittelt wird, dass der Torsionskorrekturwinkel $\psi_\Delta$ vom Konvergenzwinkel $\Delta\varphi$ gemäß

$$\Delta\varphi = -\frac{PD - a_i \Delta\mathrm{Pr}_0}{a_i - b'(1 + a_i S)}$$

in Abhängigkeit von einer Pupillendistanz $PD$ des Brillenträgers, eines Drehpunkt-Scheitelabstands $b'$ und einer sphärischen Wirkung $S$ des Brillenglases abhängt, wobei der Wert $\Delta\mathrm{Pr}_0$ eine prismatische Wirkung bezeichnet.

5. Verfahren nach einem der vorangegangenen Ansprüche, wobei im Fall des Ermitteins einer transformierten Zylinderachse $\alpha_i$ diese derart ermittelt wird, dass der Wert $\Delta\mathrm{Pr}_0$ der prismatischen Wirkung der Differenz der Horizontalkomponenten der prismatischen Verordnungen für das linke und rechte Auge entspricht.

6. Verfahren nach einem der vorangegangenen Ansprüche, wobei im Fall des Ermittelns einer transformierten Zylinderachse $\alpha_i$ diese derart ermittelt wird, dass der Torsionskorrekturwinkel $\psi_\Delta$ vom Konvergenzwinkel $\Delta\varphi$ gemäß

$$\Delta\varphi = \frac{PD}{a_i - b'(1 + a_i S)}$$

in Abhängigkeit von der Pupillendistanz $PD$ des Brillenträgers, des Drehpunkt-Scheitelabstands $b'$ und einer sphärischen Wirkung $S$ des Brillenglases abhängt.

7. Verfahren nach einem der vorgegangenen Ansprüche, wobei im Fall des Ermitteins einer transformierten Zylinderachse $\alpha_i$ diese derart ermittelt wird, dass als Brechwertmatrix $\mathbf{S} = \begin{pmatrix} S_{xx} & S_{xy} \\ S_{xy} & S_{yy} \end{pmatrix}$ des Brillenglases die sphärozylindrische Wirkung $\mathbf{S}_0$ der Verordnung für den Brillenträger verwendet wird.

8. Verfahren nach einem der Ansprüche 1 bis 6, wobei im Fall des Ermitteins einer transformierten Zylinderachse $\alpha_i$ diese derart ermittelt wird, dass als Brechwertmatrix $\mathbf{S} = \begin{pmatrix} S_{xx} & S_{xy} \\ S_{xy} & S_{yy} \end{pmatrix}$ des Brillenglases die sphärozylindrische Wirkung $\mathbf{S}_i$ an der Bewertungsstelle $i_b$ verwendet wird.

9. Verfahren nach einem der Ansprüche 1 bis 6, wobei im Fall des Ermitteins einer transformierten Zylinderachse $\alpha_i$ diese derart ermittelt wird, dass als Brechwertmatrix $\mathbf{S} = \begin{pmatrix} S_{xx} & S_{xy} \\ S_{xy} & S_{yy} \end{pmatrix}$ des Brillenglases ein Mittelwert zwischen der sphärozylindrischen Wirkung $\mathbf{S}_i$ an der Bewertungsstelle $i_b$ und der sphärozylindrischen Wirkung an einem Bezugspunkt des Brillenglases, insbesondere dem Prismenbezugspunkt oder dem Fernbezugspunkt, verwendet wird.

10. Computerprogrammerzeugnis, welches Programmteile enthält, welche ausgelegt sind, wenn geladen und ausgeführt auf einem Computer, ein Verfahren zur Optimierung eines Brillenglases auszuführen, für eine bestimmte Gebrauchssituation zur Korrektion zumindest einer astigmatischen Refraktion eines Auges eines Brillenträgers, welche in einer Referenzblickrichtung $-\mathbf{e}_z$ des Auges einen Zylinderreferenzwert $Z_0$ und eine Zylinderreferenzachse $\alpha_0$ aufweist, umfassend einen Berechnungs- bzw. Optimierungsschritt des Brillenglases, welcher umfasst:

- Bestimmen einer Objektentfernung $a_i$ für zumindest eine Bewertungsstelle $i_b$ des Brillenglases;
- Ermitteln einer transformierten astigmatischen Refraktion für die zumindest eine Bewertungsstelle $i_b$ des Brillenglases aus dem Zylinderreferenzwert $Z_0$ und der Zylinderreferenzachse $\alpha_0$ in Abhängigkeit von der be-

stimmten Objektentfernung $a_i$; und

- Optimieren des Brillenglases derart, dass für die zumindest eine Bewertungsstelle $i_b$ eine Korrektion der transformierten astigmatischen Refraktion durch das Brillenglas in der bestimmten Gebrauchssituation berücksichtigt wird,

wobei das Ermitteln der transformierten astigmatischen Refraktion ein Ermitteln eines transformierten Zylinderwerts $Z_i$ und/oder einer transformierten Zylinderachse $\alpha_i$ in Abhängigkeit von der bestimmten Objektentfernung $a_i$ umfasst; wobei der transformierte Zylinderwert $Z_i$ gemäß

$$Z_i = Z_0 + e\left(Add + \frac{1}{a_i}\right)\left(-2 + e\left(Add + \frac{1}{a_i} - 2S_0 - Z_0\right)\right)Z_0$$

von einem Abstand e zwischen dem Brillenglas und der Hauptebene des Auges und von einer für die Referenzblickrichtung $-\mathbf{e}_z$ ermittelten Sphäre $S_0$ der zu korrigierenden Refraktion des Auges abhängt, wobei $Add$ einen Brechwertzuwachs von der Referenzblickrichtung $-\mathbf{e}_z$ zu einer der zumindest einen Bewertungsstelle $i_b$ entsprechenden Blickrichtung $-\mathbf{e}_\zeta$ des Auges bezeichnet, und

wobei die transformierte Zylinderachse $\alpha_i$ mit einer sowohl zur Referenzblickrichtung $-\mathbf{e}_z$ als auch zu einer der zumindest einen Bewertungsstelle $i_b$ entsprechenden Blickrichtung $-\mathbf{e}_\zeta$ des Auges senkrechten Torsionsreferenzachse $\mathbf{e}_L$ einen Korrektionstorsionswinkel $\psi_K$ einschließt, der von einem Referenztorsionswinkel $\psi_0$ zwischen der Zylinderreferenzachse $\alpha_0$ und der Torsionsreferenzachse $\mathbf{e}_L$ um einen Torsionskorrekturwinkel

$$\psi_\Delta = \frac{(\sin \vartheta)\Delta\varphi}{1 + \cos \vartheta \cos\left(\varphi + \frac{\Delta\varphi}{2}\right)}$$

abweicht, welcher vom ersten Helmholtz-Winkel $\vartheta$ und vom zweiten Helmholtz-Winkel $\varphi$ der der zumindest einen Bewertungsstelle $i_b$ entsprechenden Blickrichtung $-\mathbf{e}_\zeta$ des Auges sowie von einem Konvergenzwinkel $\Delta\varphi$ gemäß

$$\Delta\varphi = -\frac{PD - a_i\left(\Delta d_y S_{xy} + \Delta\mathrm{Pr}_0\right)}{a_i - b'\left(1 + a_i S_{xx}\right)}$$

in Abhängigkeit von einer Pupillendistanz $PD$ des Brillenträgers, eines Drehpunkt-Scheitelabstands $b'$ und Komponenten $S_{xx}$ und $S_{xy}$ einer Brechwertmatrix $\mathbf{S} = \begin{pmatrix} S_{xx} & S_{xy} \\ S_{xy} & S_{yy} \end{pmatrix}$ des Brillenglases abhängt, wobei der Wert $\Delta\mathrm{Pr}_0$

eine prismatische Wirkung und der Wert $\Delta d_y$ eine Differenz der vertikalen Blicksenkung zwischen linkem und rechtem Auge bezeichnet.

11. Speichermedium mit einem darauf gespeicherten Computerprogramm, wobei das Computerprogramm ausgelegt ist, wenn geladen und ausgeführt auf einem Computer, ein Verfahren zur Optimierung eines Brillenglases auszuführen, für eine bestimmte Gebrauchssituation zur Korrektion zumindest einer astigmatischen Refraktion eines Auges eines Brillenträgers, welche in einer Referenzblickrichtung $-\mathbf{e}_z$ des Auges einen Zylinderreferenzwert $Z_0$ und eine Zylinderreferenzachse $\alpha_0$ aufweist, umfassend einen Berechnungs- bzw. Optimierungsschritt des Brillenglases, welcher umfasst:

- Bestimmen einer Objektentfernung $a_i$ für zumindest eine Bewertungsstelle $i_b$ des Brillenglases;
- Ermitteln einer transformierten astigmatischen Refraktion für die zumindest eine Bewertungsstelle $i_b$ des Brillenglases aus dem Zylinderreferenzwert $Z_0$ und der Zylinderreferenzachse $\alpha_0$ in Abhängigkeit von der bestimmten Objektentfernung $a_i$; und
- Optimieren des Brillenglases derart, dass für die zumindest eine Bewertungsstelle $i_b$ eine Korrektion der transformierten astigmatischen Refraktion durch das Brillenglas in der bestimmten Gebrauchssituation berück-

sichtig wird,

wobei das Ermitteln der transformierten astigmatischen Refraktion ein Ermitteln eines transformierten Zylinderwerts $Z_i$ und/oder einer transformierten Zylinderachse $\alpha_i$ in Abhängigkeit von der bestimmten Objektentfernung $a_i$ umfasst; wobei der transformierte Zylinderwert $Z_i$ gemäß

$$Z_i = Z_0 + e\left( Add + \frac{1}{a_i} \right)\left( -2 + e\left( Add + \frac{1}{a_i} - 2S_0 - Z_0 \right) \right)Z_0$$

von einem Abstand $e$ zwischen dem Brillenglas und der Hauptebene des Auges und von einer für die Referenzblickrichtung $-\mathbf{e}_z$ ermittelten Sphäre $S_0$ der zu korrigierenden Refraktion des Auges abhängt, wobei $Add$ einen Brechwertzuwachs von der Referenzblickrichtung $-e_z$ zu einer der zumindest einen Bewertungsstelle $i_b$ entsprechenden Blickrichtung $-\mathbf{e}_\zeta$ des Auges bezeichnet, und

wobei die transformierte Zylinderachse $\alpha_i$ mit einer sowohl zur Referenzblickrichtung $-\mathbf{e}_z$ als auch zu einer der zumindest einen Bewertungsstelle $i_b$ entsprechenden Blickrichtung $-\mathbf{e}_\zeta$ des Auges senkrechten Torsionsreferenzachse $\mathbf{e}_L$ einen Korrektionstorsionswinkel $\psi_K$ einschließt, der von einem Referenztorsionswinkel $\psi_0$ zwischen der Zylinderreferenzachse $\alpha_0$ und der Torsionsreferenzachse $\mathbf{e}_L$ um einen Torsionskorrekturwinkel

$$\psi_\Delta = \frac{(\sin\vartheta)\Delta\varphi}{1 + \cos\vartheta\cos\left(\varphi + \frac{\Delta\varphi}{2}\right)}$$

abweicht, welcher vom ersten Helmholtz-Winkel $\vartheta$ und vom zweiten Helmholtz-Winkel $\varphi$ der der zumindest einen Bewertungsstelle $i_b$ entsprechenden Blickrichtung $-\mathbf{e}_\zeta$ des Auges sowie von einem Konvergenzwinkel $\Delta\varphi$ gemäß

$$\Delta\varphi = -\frac{PD - a_i\left(\Delta d_y S_{xy} + \Delta\mathrm{Pr}_0\right)}{a_i - b'\left(1 + a_i S_{xx}\right)}$$

in Abhängigkeit von einer Pupillendistanz $PD$ des Brillenträgers, eines Drehpunkt-Scheitelabstands $b'$ und Komponenten $S_{xx}$ und $S_{xy}$ einer Brechwertmatrix $\mathbf{S} = \begin{pmatrix} S_{xx} & S_{xy} \\ S_{xy} & S_{yy} \end{pmatrix}$ des Brillenglases abhängt, wobei der Wert $\Delta\mathrm{Pr}_0$ eine prismatische Wirkung und der Wert $\Delta d_y$ eine Differenz der vertikalen Blicksenkung zwischen linkem und rechtem Auge bezeichnet.

12. Vorrichtung zur Herstellung zumindest eines Brillenglases, wobei die Vorrichtung umfasst:

- Erfassungsmittel zum Erfassen von Zieldaten zumindest eines Brillenglases;
- Berechnungs- und Optimierungsmittel zum Berechnen und Optimieren eines Brillenglases für eine bestimmte Gebrauchssituation zur Korrektion zumindest einer astigmatischen Refraktion eines Auges eines Brillenträgers, welche in einer Referenzblickrichtung $-e_z$ des Auges einen Zylinderreferenzwert $Z_0$ und eine Zylinderreferenzachse $\alpha_0$ aufweist, wobei das Berechnen und Optimieren derart erfolgt, dass es einen Berechnungs- bzw. Optimierungsschritt des Brillenglases umfasst, welcher umfasst:
- Bestimmen einer Objektentfernung $a_i$ für zumindest eine Bewertungsstelle $i_b$ des Brillenglases;
- Ermitteln einer transformierten astigmatischen Refraktion für die zumindest eine Bewertungsstelle $i_b$ des Brillenglases aus dem Zylinderreferenzwert $Z_0$ und der Zylinderreferenzachse $\alpha_0$ in Abhängigkeit von der bestimmten Objektentfernung $a_i$; und
- Optimieren des Brillenglases derart, dass für die zumindest eine Bewertungsstelle $i_b$ eine Korrektion der transformierten astigmatischen Refraktion durch das Brillenglas in der bestimmten Gebrauchssituation berücksichtigt wird,

wobei das Ermitteln der transformierten astigmatischen Refraktion ein Ermitteln eines transformierten Zylinderwerts $Z_i$ und/oder einer transformierten Zylinderachse $\alpha_i$ in Abhängigkeit von der bestimmten Objektentfernung $a_i$ umfasst; wobei der transformierte Zylinderwert $Z_i$ gemäß

$$Z_i = Z_0 + e\left(Add + \frac{1}{a_i}\right)\left(-2 + e\left(Add + \frac{1}{a_i} - 2S_0 - Z_0\right)\right)Z_0$$

von einem Abstand $e$ zwischen dem Brillenglas und der Hauptebene des Auges und von einer für die Referenzblickrichtung -$\mathbf{e}_z$ ermittelten Sphäre $S_0$ der zu korrigierenden Refraktion des Auges abhängt, wobei $Add$ einen Brechwertzuwachs von der Referenzblickrichtung -$\mathbf{e}_z$ zu einer der zumindest einen Bewertungsstelle $i_b$ entsprechenden Blickrichtung -$\mathbf{e}_\zeta$ des Auges bezeichnet, und

wobei die transformierte Zylinderachse $\alpha_i$ mit einer sowohl zur Referenzblickrichtung -$\mathbf{e}_z$ als auch zu einer der zumindest einen Bewertungsstelle $i_b$ entsprechenden Blickrichtung - $\mathbf{e}_\zeta$ des Auges senkrechten Torsionsreferenzachse $\mathbf{e}_L$ einen Korrektionstorsionswinkel $\psi_K$ einschließt, der von einem Referenztorsionswinkel $\psi_0$ zwischen der Zylinderreferenzachse $\alpha_0$ und der Torsionsreferenzachse $\mathbf{e}_L$ um einen Torsionskorrekturwinkel

$$\psi_\Delta = \frac{(\sin\vartheta)\Delta\varphi}{1 + \cos\vartheta\cos\left(\varphi + \frac{\Delta\varphi}{2}\right)}$$

abweicht, welcher vom ersten Helmholtz-Winkel $\vartheta$ und vom zweiten Helmholtz-Winkel $\varphi$ der der zumindest einen Bewertungsstelle $i_b$ entsprechenden Blickrichtung -$\mathbf{e}_\zeta$ des Auges sowie von einem in Konvergenzwinkel $\Delta\varphi$ gemäß

$$\Delta\varphi = -\frac{PD - a_i\left(\Delta d_y S_{xy} + \Delta\mathrm{Pr}_0\right)}{a_i - b'\left(1 + a_i S_{xx}\right)}$$

in Abhängigkeit von einer Pupillendistanz $PD$ des Brillenträgers, eines Drehpunkt-Scheitelabstands $b'$ und Komponenten $S_{xx}$ und $S_{sy}$ einer Brechwertmatrix $\mathbf{S} = \begin{pmatrix} S_{xx} & S_{xy} \\ S_{xy} & S_{yy} \end{pmatrix}$ des Brillenglases abhängt, wobei der Wert $\Delta\mathrm{Pr}_0$ eine prismatische Wirkung und der Wert $\Delta d_y$ eine Differenz der vertikalen Blicksenkung zwischen linkem und rechtem Auge bezeichnet.

**Claims**

1. Method for optimising and producing a spectacle lens for a specific situation of use for the correction of at least one astigmatic refraction of an eye of a spectacle wearer, which in a reference viewing direction -$e_z$ of the eye has a cylinder reference value $Z_0$ and a cylinder reference axis $\alpha_0$, comprising a step of calculating or optimising the spectacle lens, which comprises:

 • determining an object distance $a_i$ for at least one evaluation site $i_b$ of the spectacle lens;
 • determining a transformed astigmatic refraction for the at least one evaluation site $i_b$ of the spectacle lens from the cylinder reference value $Z_o$ and the cylinder reference axis $\alpha_0$ as a function of the specific object distance $a_i$; and
 • optimising the spectacle lens in such a manner that for the at least one evaluation site $i_b$ a correction of the transformed astigmatic refraction is taken into consideration by means of the spectacle lens in the specific situation of use,

wherein the determination of the transformed astigmatic refraction comprises a determination of a transformed

cylinder value $Z_i$ and/or a transformed cylinder axis $\alpha_i$ as a function of the specific object distance $a_i$; wherein according to

$$Z_i = Z_0 + e\left(Add + \frac{1}{a_i}\right)\left(-2 + e\left(Add + \frac{1}{a_i} - 2S_0 - Z_0\right)\right)Z_0$$

the transformed cylinder value $Z_i$ is dependent on a distance e between the spectacle lens and the principal plane of the eye and on a sphere $S_0$ of the refraction of the eye to be corrected determined for the reference viewing direction $-e_z$, wherein *Add* denotes an increase in optical power from the reference viewing direction $-e_z$ to a viewing direction $-e_\zeta$ of the eye corresponding to the at least one evaluation site $i_b$, and wherein with a torsion reference axis $e_L$ perpendicular both to the reference viewing direction $-e_z$ and to a viewing direction $-e_\zeta$ of the eye corresponding to the at least one evaluation site $i_b$ the transformed cylinder axis $\alpha_i$ encloses a correction torsion angle $\psi_K$, which differs from a reference torsion angle $\psi_0$ between the cylinder reference axis $\alpha_0$ and the torsion reference axis $e_L$ by a torsion correction angle

$$\psi_\Delta = \frac{(\sin\vartheta)\Delta\varphi}{1 + \cos\vartheta\cos\left(\varphi + \frac{\Delta\varphi}{2}\right)}$$

which is dependent on the first Helmholtz angle $\vartheta$ and on the second Helmholtz angle $\varphi$ of the viewing direction $-e_\zeta$ of the eye corresponding to the at least one evaluation site $i_b$ and also on a convergence angle $\Delta\varphi$ in accordance with

$$\Delta\varphi = -\frac{PD - a_i\left(\Delta d_y S_{xy} + \Delta Pr_0\right)}{a_i - b'\left(1 + a_i S_{xx}\right)}$$

as a function of a pupil distance PD of the spectacle wearer, of a centre of rotation vertex distance b' and components $S_{xx}$ and $S_{xy}$ of a power matrix

$$S = \begin{pmatrix} S_{xx} & S_{xy} \\ S_{xy} & S_{yy} \end{pmatrix}$$

of the spectacle lens, wherein the value $\Delta Pr_0$ denotes a prismatic effect and the value $\Delta d_y$ denotes a difference of the vertical lowering of vision between the left and right eye.

2. Method according to claim 1, wherein the reference viewing direction $-e_z$ of the eye corresponds to the zero viewing direction of the spectacle wearer and the at least one evaluation site $i_b$ of the spectacle lens corresponds to a near reference point of the spectacle lens.

3. Method according to one of the preceding claims, wherein in the case of the determination of a transformed cylinder value $Z_i$ the method additionally comprises determination of a transformed sphere $S_i$, which in accordance with

$$S_i = S_0 + \frac{(Z_0 - Z_i)}{2} + Add + e^2 \left( Add + \frac{1}{a_i} \right) Z_0^2$$

is dependent on the transformed cylinder value $Z_i$ and wherein the optimisation of the spectacle lens occurs in such a manner that for the at least one evaluation site $i_b$ a correction of the transformed sphere $S_i$ is taken into consideration by means of the spectacle lens in the specific situation of use.

4. Method according to one of the preceding claims, wherein in the case of the determination of a transformed cylinder axis $\alpha_i$ this is determined in such a manner that the torsion correction angle $\psi_\Delta$ is dependent on the convergence angle $\Delta\varphi$ in accordance with

$$\Delta\varphi = -\frac{PD - a_i \Delta Pr_0}{a_i - b'(1 + a_i S)}$$

as a function of a pupil distance PD of the spectacle wearer, of a centre of rotation vertex distance b' and a spherical effect S of the spectacle lens, wherein the value $\Delta Pr_0$ denotes a prismatic effect.

5. Method according to one of the preceding claims, wherein in the case of the determination of a transformed cylinder axis $\alpha_i$ this is determined in such a manner that the value $\Delta Pr_0$ corresponds to the prismatic effect of the difference of the horizontal components of the prismatic prescriptions for the left and the right eye.

6. Method according to one of the preceding claims, wherein in the case of the determination of a transformed cylinder axis $\alpha_i$ this is determined in such a manner that the torsion correction angle $\psi_\Delta$ is dependent on the convergence angle $\Delta\varphi$ in accordance with

$$\Delta\varphi = \frac{PD}{a_i - b'(1 + a_i S)}$$

as a function of the pupil distance PD of the spectacle wearer, of the centre of rotation vertex distance b' and the spherical effect S of the spectacle lens.

7. Method according to one of the preceding claims, wherein in the case of the determination of a transformed cylinder axis $\alpha_i$ this is determined in such a manner that the spherocylindrical effect So of the prescription for the spectacle wearer is used as power matrix

$$S = \begin{pmatrix} S_{xx} & S_{xy} \\ S_{xy} & S_{yy} \end{pmatrix}$$

of the spectacle lens.

8. Method according to one of claims 1 to 6, wherein the case of the determination of a transformed cylinder axis $\alpha_i$ this is determined in such a manner that the sphero-cylindrical effect $S_i$ at the evaluation site $i_b$ is used as power matrix

$$S = \begin{pmatrix} S_{xx} & S_{xy} \\ S_{xy} & S_{yy} \end{pmatrix}$$

of the spectacle lens.

9. Method according to one of claims 1 to 6, wherein the case of the determination of a transformed cylinder axis $\alpha_i$ this is determined in such a manner that a mean value between the spherocylindrical effect $S_i$ at the evaluation site $i_b$ and the sphero-cylindrical effect at a reference point of the spectacle lens, in particular the prism reference point or the far reference point, is used as power matrix

$$S = \begin{pmatrix} S_{xx} & S_{xy} \\ S_{xy} & S_{yy} \end{pmatrix}$$

of the spectacle lens.

10. Computer program product, which contains program parts, which when loaded and executed on a computer are designed to perform a method for optimising a spectacle lens for a specific situation of use for the correction of at least one astigmatic refraction of an eye of a spectacle wearer, which in a reference viewing direction $-e_z$ of the eye has a cylinder reference value $Z_0$ and a cylinder reference axis $\alpha_0$, comprising a step of calculating or optimising the spectacle lens, which comprises:

   • determining an object distance $a_i$ for at least one evaluation site $i_b$ of the spectacle lens;
   • determining a transformed astigmatic refraction for the at least one evaluation site $i_b$ of the spectacle lens from the cylinder reference value $Z_0$ and the cylinder reference axis $\alpha_0$ as a function of the specific object distance $a_i$; and
   • optimising the spectacle lens in such a manner that for the at least one evaluation site $i_b$ a correction of the transformed astigmatic refraction is taken into consideration by means of the spectacle lens in the specific situation of use,

   wherein the determination of the transformed astigmatic refraction comprises a determination of a transformed cylinder value $Z_i$ and/or a transformed cylinder axis $\alpha_i$ as a function of the specific object distance $a_i$;
   wherein according to

$$Z_i = Z_0 + e\left( Add + \frac{1}{a_i} \right)\left( -2 + e\left( Add + \frac{1}{a_i} - 2S_0 - Z_0 \right) \right) Z_0$$

   the transformed cylinder value $Z_i$ is dependent on a distance e between the spectacle lens and the principal plane of the eye and on a sphere So of the refraction of the eye to be corrected determined for the reference viewing direction $-e_z$, wherein *Add* denotes an increase in optical power from the reference viewing direction $-e_z$ to a viewing direction $-e_\zeta$ of the eye corresponding to the at least one evaluation site $i_b$, and wherein with a torsion reference axis $e_L$ perpendicular both to the reference viewing direction $-e_z$ and to a viewing direction $-e_\zeta$ of the eye corresponding to the at least one evaluation site $i_b$ the transformed cylinder axis $\alpha_i$ encloses a correction torsion angle $\psi_K$, which differs from a reference torsion angle $\psi_0$ between the cylinder reference axis $\alpha_0$ and the torsion reference axis $e_L$ by a torsion correction angle

$$\psi_\Delta = \frac{(\sin \vartheta)\Delta\varphi}{1 + \cos\vartheta\cos\left(\varphi + \dfrac{\Delta\varphi}{2}\right)}$$

which is dependent on the first Helmholtz angle $\vartheta$ and on the second Helmholtz angle $\varphi$ of the viewing direction $-e_\zeta$ of the eye corresponding to the at least one evaluation site $i_b$ and also on a convergence angle $\Delta\varphi$ in accordance with

$$\Delta\varphi = -\frac{PD - a_i\left(\Delta d_y S_{xy} + \Delta Pr_0\right)}{a_i - b'(1 + a_i S_{xx})}$$

as a function of a pupil distance PD of the spectacle wearer, of a centre of rotation vertex distance b' and components $S_{xx}$ and $S_{xy}$ of a power matrix

$$S = \begin{pmatrix} S_{xx} & S_{xy} \\ S_{xy} & S_{yy} \end{pmatrix}$$

of the spectacle lens, wherein the value $\Delta Pr_0$ denotes a prismatic effect and the value $\Delta d_y$ denotes a difference of the vertical lowering of vision between the left and right eye.

11. Storage medium with a computer program stored thereon, wherein when loaded and executed on a computer the computer program is designed to perform a method for optimising a spectacle lens for a specific situation of use for the correction of at least one astigmatic refraction of an eye of a spectacle wearer, which in a reference viewing direction $-e_z$ of the eye has a cylinder reference value $Z_0$ and a cylinder reference axis $\alpha_0$, comprising a step of calculating or optimising the spectacle lens, which comprises:

- determining an object distance $\alpha_i$ for at least one evaluation site $i_b$ of the spectacle lens;
- determining a transformed astigmatic refraction for the at least one evaluation site $i_b$ of the spectacle lens from the cylinder reference value $Z_0$ and the cylinder reference axis $\alpha_0$ as a function of the specific object distance $a_i$; and
- optimising the spectacle lens in such a manner that for the at least one evaluation site $i_b$ a correction of the transformed astigmatic refraction is taken into consideration by means of the spectacle lens in the specific situation of use,

wherein the determination of the transformed astigmatic refraction comprises a determination of a transformed cylinder value $Z_i$ and/or a transformed cylinder axis $\alpha_i$ as a function of the specific object distance $a_i$; wherein according to

$$Z_i = Z_0 + e\left(Add + \frac{1}{a_i}\right)\left(-2 + e\left(Add + \frac{1}{a_i} - 2S_0 - Z_0\right)\right)Z_0$$

the transformed cylinder value $Z_i$ is dependent on a distance e between the spectacle lens and the principal plane of the eye and on a sphere So of the refraction of the eye to be corrected determined for the reference viewing direction $-e_z$, wherein *Add* denotes an increase in optical power from the reference viewing direction $-e_z$ to a viewing direction $-e_\zeta$ of the eye corresponding to the at least one evaluation site $i_b$, and wherein with a torsion reference axis $e_L$ vertical to both the reference viewing direction $-e_z$ and to a viewing direction $-e_\zeta$ of the eye corresponding to the at least one evaluation site $i_b$ the transformed cylinder axis $\alpha_i$ encloses a correction torsion angle $\psi_K$, which differs from a reference torsion angle $\psi_0$ between the cylinder reference axis $\alpha_0$ and the torsion reference axis $e_L$ by a torsion correction angle

$$\psi_\Delta = \frac{(\sin \vartheta)\Delta\varphi}{1 + \cos\vartheta\cos\left(\varphi + \dfrac{\Delta\varphi}{2}\right)}$$

which is dependent on the first Helmholtz angle $\vartheta$ and on the second Helmholtz angle $\varphi$ of the viewing direction $-e_\zeta$ of the eye corresponding to the at least one evaluation site $i_b$ and also on a convergence angle $\Delta\varphi$ in accordance with

$$\Delta\varphi = -\frac{PD - a_i\left(\Delta d_y S_{xy} + \Delta\mathrm{Pr}_0\right)}{a_i - b'\left(1 + a_i S_{xx}\right)}$$

as a function of a pupil distance PD of the spectacle wearer, of a centre of rotation vertex distance b' and components $S_{xx}$ and $S_{xy}$ of a power matrix

$$S = \begin{pmatrix} S_{xx} & S_{xy} \\ S_{xy} & S_{yy} \end{pmatrix}$$

of the spectacle lens, wherein the value $\Delta\mathrm{Pr}_0$ denotes a prismatic effect and the value $\Delta d_y$ denotes a difference of the vertical lowering of vision between the left and the right eye.

12. Device for producing at least one spectacle lens, wherein the device comprises:

• acquisition means for acquiring target data of at least one spectacle lens;
• calculating and optimising means for calculating and optimising a spectacle lens for a specific for the correction of at least one astigmatic refraction of an eye of a spectacle wearer, which in a reference viewing direction $-e_z$ of the eye has a cylinder reference value $Z_0$ and a cylinder reference axis $\alpha_0$, wherein the calculation and optimisation occurs in such a manner that it comprises a step of calculating or optimising the spectacle lens, which comprises:
• determining an object distance $\alpha_i$ for at least one evaluation site $i_b$ of the spectacle lens;
• determining a transformed astigmatic refraction for the at least one evaluation site $i_b$ of the spectacle lens from the cylinder reference value $Z_0$ and the cylinder reference axis $\alpha_0$ as a function of the specific object distance $a_i$; and
• optimising the spectacle lens in such a manner that for the at least one evaluation site $i_b$ a correction of the transformed astigmatic refraction is taken into consideration by means of the spectacle lens in the specific situation of use,

wherein the determination of the transformed astigmatic refraction comprises a determination of a transformed cylinder value $Z_i$ and/or a transformed cylinder axis $\alpha_i$ as a function of the specific object distance $a_i$; wherein according to

$$Z_i = Z_0 + e\left(Add + \frac{1}{a_i}\right)\left(-2 + e\left(Add + \frac{1}{a_i} - 2S_0 - Z_0\right)\right)Z_0$$

the transformed cylinder value $Z_i$ is dependent on a distance e between the spectacle lens and the principal plane of the eye and on a sphere $S_0$ of the refraction of the eye to be corrected determined for the reference viewing direction $-e_z$, wherein *Add* denotes an increase in optical power from the reference viewing direction $-e_z$ to a viewing direction $-e_\zeta$ of the eye corresponding to the at least one evaluation site $i_b$, and wherein with a torsion reference axis $e_L$ vertical to both the reference viewing direction $-e_z$ and to a viewing direction $-e_\zeta$ of the eye corresponding to the at least one evaluation site $i_b$ the transformed cylinder axis $\alpha_i$ encloses a correction torsion angle $\psi_K$, which differs from a reference torsion angle $\psi_0$ between the cylinder reference axis $\alpha_0$ and the torsion reference axis $e_L$ by a torsion correction angle

$$\psi_\Delta = \frac{(\sin \vartheta)\Delta\varphi}{1+\cos\vartheta\cos\left(\varphi+\dfrac{\Delta\varphi}{2}\right)}$$

which is dependent on the first Helmholtz angle $\vartheta$ and on the second Helmholtz angle $\varphi$ of the viewing direction $-e_\zeta$ of the eye corresponding to the at least one evaluation site $i_b$ and also on a convergence angle $\Delta\varphi$ in accordance with

$$\Delta\varphi = -\frac{PD - a_i\left(\Delta d_y S_{xy} + \Delta Pr_0\right)}{a_i - b'\left(1+a_i S_{xx}\right)}$$

as a function of a pupil distance PD of the spectacle wearer, of a centre of rotation vertex distance b' and components $S_{xx}$ and $S_{xy}$ of a power matrix

$$S = \begin{pmatrix} S_{xx} & S_{xy} \\ S_{xy} & S_{yy} \end{pmatrix}$$

of the spectacle lens, wherein the value $\Delta Pr_0$ denotes a prismatic effect and the value $\Delta d_y$ denotes a difference of the vertical lowering of vision between the left and the right eye.

## Revendications

1. Procédé d'optimisation et de fabrication d'un verre de lunettes pour une situation d'utilisation définie, destiné à corriger au moins une réfraction astigmatique d'un oeil d'un porteur de lunettes qui présente une valeur de cylindre de référence $Z_0$ et un axe de cylindre de référence $\alpha_0$ dans une direction de vision de référence $-e_z$ de l'oeil, comprenant une étape de calcul ou d'optimisation du verre de lunettes, laquelle comprend :

   - la définition d'une distance d'objet $\alpha_i$ pour au moins un point d'évaluation $i_b$ du verre de lunettes ;
   - la détermination d'une réfraction astigmatique transformée pour ledit au moins un point d'évaluation $i_b$ du verre de lunettes à partir de la valeur de cylindre de référence $Z_0$ et de l'axe de cylindre de référence $\alpha_0$ en fonction de la distance d'objet $\alpha_i$ définie ; et
   - l'optimisation du verre de lunettes de sorte que soit prise en compte par le verre de lunettes une correction de la réfraction astigmatique transformée pour ledit au moins un point d'évaluation $i_b$ dans la situation d'utilisation définie, la détermination de la réfraction astigmatique transformée comprenant une détermination d'une valeur de cylindre transformée Zi et/ou d'un axe de cylindre transformé $\alpha_i$ en fonction de la distance d'objet $\alpha_i$ définie ;

   la valeur de cylindre transformée Zi suivant

$$Z_i = Z_0 + e\left( Add + \frac{1}{a_i} \right)\left( -2 + e\left( Add + \frac{1}{a_i} - 2S_0 - Z_0 \right) \right)Z_0$$

dépendant d'une distance e entre le verre de lunettes et le plan principal de l'oeil et d'une sphère So de la réfraction de l'oeil à corriger, déterminée pour la direction de vision de référence $-e_z$, Add représentant une augmentation d'indice de réfraction entre la direction de vision de référence $-e_z$ et une direction de vision $-e_\zeta$ de l'oeil correspondant audit au moins un point d'évaluation $i_b$, et

l'axe de cylindre transformé $\alpha_i$ formant un angle de torsion de correction $\psi_K$ avec un axe de torsion de référence $e_L$ perpendiculaire tant à la direction de vision de référence $-e_z$ qu'à une direction de vision $-e_\zeta$ du porteur de lunettes correspondant audit au moins un point d'évaluation $i_b$, lequel diffère d'un angle de correction de torsion

$$\psi_\Delta = \frac{(\sin \vartheta)\Delta\varphi}{1 + \cos \vartheta \cos\left( \varphi + \frac{\Delta\varphi}{2} \right)}$$

par rapport à un angle de torsion de référence $\psi_0$ entre l'axe de cylindre de référence $\alpha_0$ et l'axe de torsion de référence $e_L$, lequel dépend du premier angle de Helmholtz $\vartheta$ et du deuxième angle de Helmholtz $\varphi$ de la direction de vision $-e_\zeta$ de l'oeil correspondant audit au moins un point d'évaluation $i_b$, ainsi que d'un angle de convergence $\Delta\varphi$ suivant

$$\Delta\varphi = -\frac{PD - a_i\left(\Delta d_y S_{xy} + \Delta \text{Pr}_0\right)}{a_i - b'\left(1 + a_i S_{xx}\right)}$$

en fonction d'une distance de pupille PD du porteur de lunettes, d'une distance sommet - centre de rotation b' et

de composantes $S_{xx}$ et $S_{xy}$ d'une matrice d'indice de réfraction $S = \begin{pmatrix} S_{xx} & S_{xy} \\ S_{xy} & S_{yy} \end{pmatrix}$ du verre de lunettes, la valeur

$\Delta\text{Pr}_0$ représentant un effet prismatique et la valeur $\Delta d_y$ une différence de baisse de vision verticale entre l'oeil gauche et l'oeil droit.

2.  Procédé selon la revendication 1, où la direction de vision de référence $-e_z$ de l'oeil correspond à la ligne de vision horizontale du porteur de lunettes, et ledit au moins un point d'évaluation $i_b$ du verre de lunettes à un point de vision de près de référence du verre de lunettes.

3.  Procédé selon l'une des revendications précédentes, où en cas de détermination d'une valeur de cylindre transformée $Z_i$, ledit procédé comprend en outre une détermination d'une sphère Si transformée, laquelle dépend suivant

$$S_i = S_0 + \frac{(Z_0 - Z_i)}{2} + Add + e^2\left( Add + \frac{1}{a_i} \right)Z_0^2$$

de la valeur de cylindre transformée $Z_i$, et où l'optimisation du verre de lunettes est effectuée de sorte que soit prise en compte par le verre de lunettes une correction de la sphère Si transformée pour ledit au moins un point d'évaluation $i_b$ dans la situation d'utilisation définie.

4.  Procédé selon l'une des revendications précédentes, où en cas de détermination d'un axe de cylindre transformé $\alpha_i$, celui-ci est déterminé de telle manière que l'angle de correction de torsion $\psi\Delta$ dépende de l'angle de convergence $\Delta\varphi$ suivant

$$\Delta\varphi = -\frac{PD - a_i \Delta\mathrm{Pr}_0}{a_i - b'(1 + a_i S)}$$

en fonction d'une distance de pupille PD du porteur de lunettes, d'une distance sommet - centre de rotation b' et d'un effet sphérique S du verre de lunettes, la valeur $\Delta\mathrm{Pr}_0$ représentant un effet prismatique.

5. Procédé selon l'une des revendications précédentes, où en cas de détermination d'un axe de cylindre transformé $\alpha_i$, celui-ci est déterminé de telle manière que la valeur $\Delta\mathrm{Pr}_0$ de l'effet prismatique corresponde à la différence des composantes horizontales des ordonnances prismatiques pour l'oeil gauche et l'oeil droit.

6. Procédé selon l'une des revendications précédentes, où en cas de détermination d'un axe de cylindre transformé $\alpha_i$, celui-ci est déterminé de telle manière que l'angle de correction de torsion $\psi\Delta$ dépende de l'angle de convergence $\Delta\varphi$ suivant

$$\Delta\varphi = \frac{PD}{a_i - b'(1 + a_i S)}$$

en fonction de la distance de pupille PD du porteur de lunettes, de la distance sommet - centre de rotation b' et d'un effet sphérique S du verre de lunettes.

7. Procédé selon l'une des revendications précédentes, où en cas de détermination d'un axe de cylindre transformé $\alpha_i$, celui-ci est déterminé de manière à utiliser comme matrice d'indice de réfraction $\mathbf{S} = \begin{pmatrix} S_{xx} & S_{xy} \\ S_{xy} & S_{yy} \end{pmatrix}$ du verre de lunettes l'effet sphéro-cylindrique $S_0$ de l'ordonnance pour le porteur de lunettes.

8. Procédé selon l'une des revendications 1 à 6, où en cas de détermination d'un axe de cylindre transformé $\alpha_i$, celui-ci est déterminé de manière à utiliser comme matrice d'indice de réfraction $\mathbf{S} = \begin{pmatrix} S_{xx} & S_{xy} \\ S_{xy} & S_{yy} \end{pmatrix}$ du verre de lunettes l'effet sphéro-cylindrique Si sur le point d'évaluation $i_b$.

9. Procédé selon l'une des revendications 1 à 6, où en cas de détermination d'un axe de cylindre transformé $\alpha_i$, celui-ci est déterminé de manière à utiliser comme matrice d'indice de réfraction $\mathbf{S} = \begin{pmatrix} S_{xx} & S_{xy} \\ S_{xy} & S_{yy} \end{pmatrix}$ du verre de lunettes une moyenne entre l'effet sphéro-cylindrique Si sur le point d'évaluation $i_b$ et l'effet sphéro-cylindrique sur un point de référence du verre de lunettes, en particulier le point de référence de prisme ou le point de vision de loin de référence.

10. Produit de programme informatique, comprenant des parties de programme prévues pour, une fois chargées et exécutées sur un ordinateur, exécuter un procédé d'optimisation d'un verre de lunettes pour une situation d'utilisation définie, destiné à corriger au moins une réfraction astigmatique d'un oeil d'un porteur de lunettes qui présente une valeur de cylindre de référence $Z_0$ et un axe de cylindre de référence $\alpha_0$ dans une direction de vision de référence $-e_z$ de l'oeil, comprenant une étape de calcul ou d'optimisation du verre de lunettes, laquelle comprend :

- la définition d'une distance d'objet $\alpha_i$ pour au moins un point d'évaluation $i_b$ du verre de lunettes ;
- la détermination d'une réfraction astigmatique transformée pour ledit au moins un point d'évaluation $i_b$ du verre de lunettes à partir de la valeur de cylindre de référence $Z_0$ et de l'axe de cylindre de référence $\alpha_0$ en fonction de la distance d'objet $\alpha_i$ définie ; et
- l'optimisation du verre de lunettes de sorte que soit prise en compte par le verre de lunettes une correction de la réfraction astigmatique transformée pour ledit au moins un point d'évaluation $i_b$ dans la situation d'utilisation définie,

la détermination de la réfraction astigmatique transformée comprenant une détermination d'une valeur de cylindre transformée Zi et/ou d'un axe de cylindre transformé $\alpha_i$ en fonction de la distance d'objet $a_i$ définie ;
la valeur de cylindre transformée Zi suivant

$$Z_i = Z_0 + e\left(Add + \frac{1}{a_i}\right)\left(-2 + e\left(Add + \frac{1}{a_i} - 2S_0 - Z_0\right)\right)Z_0$$

dépendant d'une distance e entre le verre de lunettes et le plan principal de l'oeil et d'une sphère So de la réfraction de l'oeil à corriger, déterminée pour la direction de vision de référence $-e_z$, Add représentant une augmentation d'indice de réfraction entre la direction de vision de référence $-e_z$ et une direction de vision $-e_\zeta$ de l'oeil correspondant audit au moins un point d'évaluation $i_b$, et
l'axe de cylindre transformé $\alpha_i$ formant un angle de torsion de correction $\psi_K$ avec un axe de torsion de référence $e_L$ perpendiculaire tant à la direction de vision de référence $-e_z$ qu'à une direction de vision $-e_\zeta$ du porteur de lunettes correspondant audit au moins un point d'évaluation $i_b$, lequel diffère d'un angle de correction de torsion

$$\psi_\Delta = \frac{(\sin \vartheta)\Delta\varphi}{1 + \cos \vartheta \cos\left(\varphi + \frac{\Delta\varphi}{2}\right)}$$

par rapport à un angle de torsion de référence $\psi_0$ entre l'axe de cylindre de référence $\alpha_0$ et l'axe de torsion de référence $e_L$, lequel dépend du premier angle de Helmholtz et du deuxième angle de Helmholtz $\varphi$ de la direction de vision $-e_\zeta$ de l'oeil correspondant audit au moins un point d'évaluation $i_b$, ainsi que d'un angle de convergence $\Delta\varphi$ suivant

$$\Delta\varphi = -\frac{PD - a_i\left(\Delta d_y S_{xy} + \Delta Pr_0\right)}{a_i - b'\left(1 + a_i S_{xx}\right)}$$

en fonction d'une distance de pupille PD du porteur de lunettes, d'une distance sommet - centre de rotation b' et

de composantes $S_{xx}$ et $S_{xy}$ d'une matrice d'indice de réfraction $S = \begin{pmatrix} S_{xx} & S_{xy} \\ S_{xy} & S_{yy} \end{pmatrix}$ du verre de lunettes, la valeur

$\Delta Pr_0$ représentant un effet prismatique et la valeur $\Delta d_y$ une différence de baisse de vision verticale entre l'oeil gauche et l'oeil droit.

**11.** Support de mémoire contenant un programme informatique mémorisé, où le programme informatique est prévu pour, une fois chargé et exécuté sur un ordinateur, exécuter un procédé d'optimisation d'un verre de lunettes pour une situation d'utilisation définie, destiné à corriger au moins une réfraction astigmatique d'un oeil d'un porteur de lunettes qui présente une valeur de cylindre de référence Zo et un axe de cylindre de référence $\alpha_0$ dans une direction de vision de référence $-e_z$ de l'oeil, comprenant une étape de calcul ou d'optimisation du verre de lunettes, laquelle comprend :

- la définition d'une distance d'objet $a_i$ pour au moins un point d'évaluation $i_b$ du verre de lunettes ;
- la détermination d'une réfraction astigmatique transformée pour ledit au moins un point d'évaluation $i_b$ du verre de lunettes à partir de la valeur de cylindre de référence Zo et de l'axe de cylindre de référence $\alpha_0$ en fonction de la distance d'objet $a_i$ définie ; et
- l'optimisation du verre de lunettes de sorte que soit prise en compte par le verre de lunettes une correction de la réfraction astigmatique transformée pour ledit au moins un point d'évaluation $i_b$ dans la situation d'utilisation définie,

la détermination de la réfraction astigmatique transformée comprenant une détermination d'une valeur de cylindre transformée $Z_i$ et/ou d'un axe de cylindre transformé $\alpha_i$ en fonction de la distance d'objet $a_i$ définie ;

la valeur de cylindre transformée $Z_i$ suivant

$$Z_i = Z_0 + e\left( Add + \frac{1}{a_i} \right)\left( -2 + e\left( Add + \frac{1}{a_i} - 2S_0 - Z_0 \right) \right)Z_0$$

dépendant d'une distance e entre le verre de lunettes et le plan principal de l'oeil et d'une sphère So de la réfraction de l'oeil à corriger, déterminée pour la direction de vision de référence -e$_z$, Add représentant une augmentation d'indice de réfraction entre la direction de vision de référence -e$_z$ et une direction de vision -e$_\zeta$ de l'oeil correspondant audit au moins un point d'évaluation i$_b$, et

l'axe de cylindre transformé $\alpha_i$ formant un angle de torsion de correction $\psi_K$ avec un axe de torsion de référence e$_L$ perpendiculaire tant à la direction de vision de référence -e$_z$ qu'à une direction de vision -e$_\zeta$ du porteur de lunettes correspondant audit au moins un point d'évaluation i$_b$, lequel diffère d'un angle de correction de torsion

$$\psi_\Delta = \frac{(\sin \vartheta)\Delta\varphi}{1 + \cos \vartheta \cos\left( \varphi + \frac{\Delta\varphi}{2} \right)}$$

par rapport à un angle de torsion de référence $\psi_0$ entre l'axe de cylindre de référence $\alpha_0$ et l'axe de torsion de référence e$_L$, lequel dépend du premier angle de Helmholtz $\vartheta$ et du deuxième angle de Helmholtz $\varphi$ de la direction de vision -e$_\zeta$ de l'oeil correspondant audit au moins un point d'évaluation i$_b$, ainsi que d'un angle de convergence $\Delta\varphi$ suivant

$$\Delta\varphi = -\frac{PD - a_i\left(\Delta d_y S_{xy} + \Delta\mathrm{Pr}_0\right)}{a_i - b'\left(1 + a_i S_{xx}\right)}$$

en fonction d'une distance de pupille PD du porteur de lunettes, d'une distance sommet - centre de rotation b' et de composantes $S_{xx}$ et $S_{xy}$ d'une matrice d'indice de réfraction $\mathbf{S} = \begin{pmatrix} S_{xx} & S_{xy} \\ S_{xy} & S_{yy} \end{pmatrix}$ du verre de lunettes, la valeur $\Delta\mathrm{Pr}_0$ représentant un effet prismatique et la valeur $\Delta d_y$ une différence de baisse de vision verticale entre l'oeil gauche et l'oeil droit.

**12.** Dispositif de fabrication d'au moins un verre de lunettes, ledit dispositif comprenant :

- des moyens de détermination destinés à déterminer des données cibles d'au moins un verre de lunettes ;
- des moyens de calcul et d'optimisation pour le calcul et l'optimisation d'un verre de lunettes pour une situation d'utilisation définie, destinés à corriger au moins une réfraction astigmatique d'un oeil d'un porteur de lunettes qui présente une valeur de cylindre de référence Zo et un axe de cylindre de référence $\alpha_0$ dans une direction de vision de référence -e$_z$ de l'oeil, le calcul et l'optimisation du verre de lunettes étant effectués de manière à comprendre une étape de calcul ou d'optimisation du verre de lunettes, laquelle comprend :
- la définition d'une distance d'objet a$_i$ pour au moins un point d'évaluation i$_b$ du verre de lunettes ;
- la détermination d'une réfraction astigmatique transformée pour ledit au moins un point d'évaluation i$_b$ du verre de lunettes à partir de la valeur de cylindre de référence $Z_0$ et de l'axe de cylindre de référence $\alpha_0$ en fonction de la distance d'objet a$_i$ définie ; et
- l'optimisation du verre de lunettes de sorte que soit prise en compte par le verre de lunettes une correction de la réfraction astigmatique transformée pour ledit au moins un point d'évaluation i$_b$ dans la situation d'utilisation définie,

la détermination de la réfraction astigmatique transformée comprenant une détermination d'une valeur de cylindre transformée Z$_i$ et/ou d'un axe de cylindre transformé $\alpha_i$ en fonction de la distance d'objet a$_i$ définie ;
la valeur de cylindre transformée Z$_i$ suivant

$$Z_i = Z_0 + e\left(Add + \frac{1}{a_i}\right)\left(-2 + e\left(Add + \frac{1}{a_i} - 2S_0 - Z_0\right)\right)Z_0$$

dépendant d'une distance $e$ entre le verre de lunettes et le plan principal de l'oeil et d'une sphère $S_0$ de la réfraction de l'oeil à corriger, déterminée pour la direction de vision de référence $-e_z$, Add représentant une augmentation d'indice de réfraction entre la direction de vision de référence $-e_z$ et une direction de vision $-e_\zeta$ de l'oeil correspondant audit au moins un point d'évaluation $i_b$, et

l'axe de cylindre transformé $\alpha_i$ formant un angle de torsion de correction $\psi_K$ avec un axe de torsion de référence $e_L$ perpendiculaire tant à la direction de vision de référence $-e_z$ qu'à une direction de vision $-e_\zeta$ du porteur de lunettes correspondant audit au moins un point d'évaluation $i_b$, lequel diffère d'un angle de correction de torsion

$$\psi_\Delta = \frac{(\sin \vartheta)\Delta\varphi}{1 + \cos\vartheta\cos\left(\varphi + \frac{\Delta\varphi}{2}\right)}$$

par rapport à un angle de torsion de référence $\psi_0$ entre l'axe de cylindre de référence $\alpha_0$ et l'axe de torsion de référence $e_L$, lequel dépend du premier angle de Helmholtz $\vartheta$ et du deuxième angle de Helmholtz $\varphi$ de la direction de vision $-e_\zeta$ de l'oeil correspondant audit au moins un point d'évaluation $i_b$, ainsi que d'un angle de convergence $\Delta\varphi$ suivant

$$\Delta\varphi = -\frac{PD - a_i\left(\Delta d_y S_{xy} + \Delta\mathrm{Pr}_0\right)}{a_i - b'\left(1 + a_i S_{xx}\right)}$$

en fonction d'une distance de pupille $PD$ du porteur de lunettes, d'une distance sommet - centre de rotation $b'$ et

de composantes $S_{xx}$ et $S_{xy}$ d'une matrice d'indice de réfraction $\mathbf{S} = \begin{pmatrix} S_{xx} & S_{xy} \\ S_{xy} & S_{yy} \end{pmatrix}$ du verre de lunettes, la valeur

$\Delta\mathrm{Pr}_0$ représentant un effet prismatique et la valeur $\Delta d_y$ une différence de baisse de vision verticale entre l'oeil gauche et l'oeil droit.

Fig. 1

Fig. 2A

Fig. 2B

Fig. 3

Astigmatismus (Komb. Glas+Auge)

Fig.4B

Astigmatismus (Komb. Glas+Auge)

Fig.4A

43

Astigmatismus (Komb. Glas+Auge)

Fig.4C

EP 2 646 870 B1

Fig. 5B
GST an HBL Vorderfl.

Fig. 5A
GST an HBL Vorderfl.

- - - Refr —— Astigmat.

Fig. 5C
GST an HBL Vorderfl.

Fig. 5D
GST an HBL Vorderfl.

- - Refr        —— Astigmat.

EP 2 646 870 B1

Fig. 6B
GST an HBL Vorderfl.

Fig. 6A
GST an HBL Vorderfl.

Fig. 6D
GST an HBL Vorderfl.

Fig. 6C
GST an HBL Vorderfl.

Fig. 7B
GST an HBL Vorderfl.

- - Refr    —— Astigmat.

Fig. 7A
GST an HBL Vorderfl.

- - Refr    —— Astigmat.

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   WO 2010054817 A1

**In der Beschreibung aufgeführte Nicht-Patentliteratur**

*   **W. BECKEN ; A. SEIDEMANN ; H. ALTHEIMER ; G. ESSER ; D. UTTENWEILER.** Brillengläser im Sport: Optimierung der Abbildungseigenschaften unter physiologischen Aspekten. *Z. Med. Phys.,* 2007, vol. 17, 56-66